# EUROPEAN PATENT SPECIFICATION

(11) **EP 4 288 851 B1**
(45) Date of publication and mention of the grant of the patent: **18.11.2026**
(21) Application number: 22704475.7
(22) Date of filing: 28.01.2022
(51) Int. Cl.: G06N 3/067, G06N 3/044, G06N 3/047, G06E 3/00

(54) **OPTICAL VECTOR MULTIPLIER**
OPTISCHER VEKTORMULTIPLIZIERER
MULTIPLICATEUR VECTORIEL OPTIQUE

(30) Priority: 05.02.2021 EP 21155439
(43) Date of publication of application: 13.12.2023
(73) Proprietor: Microsoft Technology Licensing, LLC, Redmond, WA 98052-6399 (US)
(72) Inventor: PARMIGIANI, Francesca, Redmond, Washington 98052-6399 (US); GKANTSIDIS, Christos, Redmond, Washington 98052-6399 (US); HALLER, István, Redmond, Washington 98052-6399 (US); BALLANI, Hitesh, Redmond, Washington 98052-6399 (US); ROWSTRON, Antony Ian Taylor, Redmond, Washington 98052-6399 (US); RYBALCHENKO, Andrey, Redmond, Washington 98052-6399 (US)
(74) Representative: Page White Farrer
(86) International application number: PCT/US2022/014173
(87) International publication number: WO 2022/169671

(56) References cited:
- US-A1- 2020 150 345
- US-A1- 2021 036 783
- TEZAK NIKOLAS ET AL: "Integrated Coherent Ising Machines Based on Self-Phase Modulation in Microring Resonators", IEEE JOURNAL OF SELECTED TOPICS IN QUANTUM ELECTRONICS, IEEE SERVICE CENTER, PISCATAWAY, NJ, US, vol. 26, no. 1, 1 January 2020 (2020-01-01), pages 1 - 15, XP011739253, ISSN: 1077-260X, [retrieved on 20190808], DOI: 10.1109/JSTQE.2019.2929184
- CHARLES ROQUES-CARMES ET AL: "Heuristic Recurrent Algorithms for Photonic Ising Machines", ARXIV.ORG, CORNELL UNIVERSITY LIBRARY, 201 OLIN LIBRARY CORNELL UNIVERSITY ITHACA, NY 14853, 7 November 2018 (2018-11-07), XP081556214

## Description

### Background

Many problems in logistics, financial portfolio management, drug discovery, and other application domains require finding an assignment of values to their inputs (typically called variables) with the goal of optimizing an objective. For instance, such problems include "combinatorial optimization problems". Unlike other areas of optimization, combinatorial optimization relates to problems where variables take values from a finite set. For example, valid assignments could be binary (e.g. whether to make an investment or not), from a limited set (e.g. one of three available routes to pick), or, in general from a finite subset of the integers. In such problems, there is a finite set of ways for combining the values of each variable. In principle, it is possible to enumerate all possible combinations and find the optimal assignment. In practice, however, such exhaustive search is infeasible for problems of even moderate sizes, as the set of combinations is extremely large (exponential in the number of variables).

There has been extensive work towards understanding the structure of such problems. A subset of combinatorial optimization problems belongs to the category of problems known as NP-complete (where NP stands for nondeterministic polynomial). NP- completeness is a concept known in computational complexity theory, and all NP-complete problems can be transformed into any other NP-complete problem. An efficient solver for any NP-complete problem implies that any NP-complete problem can be solved efficiently. All NP-complete problems also belong to a larger subset of problems known as 'NP-hard', where all NP-hard problems can also be transformed into all other NP-hard problems.

The term "efficient" in this setting means finding a solution to the problem without enumerating all possibilities. Specifically, an efficient solution to a graph optimization described herein is a solution whereby the amount of time taken to find the solution scales polynomially with the number of variables of the problem (such as graph vertices), whereas enumerating all possible solutions is exponential with the number of variables of the problem. However, it is widely accepted that no such efficient solver can ever exist. Instead, work in this area has focused on devising algorithms that find solutions that are "good enough"; often there are no assurances that such approximation algorithms will indeed provide an answer which is close enough to the exact solution.

A variety of combinatorial optimization problems exist, and, as described above, NP-complete problems may be transformed to other NP-complete problems. For example, the traveling salesman problem is defined as follows: for a given set of cities and pairwise distances between cities, the problem is to find a path via all the cities, wherein each city is visited exactly once, such that the path has the shortest total length.

A general form of combinatorial optimization problem can be defined called quadratic unconstrained binary optimization (QUBO) problems, which are defined by a set of binary variables *V =* {*v*₁, *v*₂, ... *V_{N}*}, each taking a value of either 0 or 1, and a formula *∑ᵢ ∑ⱼ Qᵢⱼ* · *vᵢ* · *vⱼ*, where the coefficient *Qᵢⱼ* defines the interaction between variable *vᵢ* and *vⱼ.* The travelling salesman problem can be formulated as a QUBO problem, by defining variables as positions in the path between each city for each possible city to be visited (for example, the first variable may indicate whether or not London is the first city visited), and with the distances between cities encoded in the matrix *Q*, such that the total distance is minimised subject to the constraint that all cities are visited exactly once. QUBO is a type of polynomial unconstrained binary optimization (PUBO) problem, which assigns values to a set of binary variables *V =* {*v*₁, *v*₂, *... , vₙ*} so as to minimise a formula *E*_{*V'*⊆}*_{V} Q_{V'}* · Π_{*v*∈}*_{V'} v,* where in this case, the coefficients Q may encode interactions between any number of variables. As mentioned above, it is possible to transform between different formulations of NP-hard problems. It is possible to transform PUBO problems to QUBO by introducing auxiliary variables and terms in the formula.

A formulation called the Ising model, used in physics to model ferromagnetism and other physical processes, is equivalent to the QUBO problem defined above. The Ising model is described in terms of a physical system with variables that can exist in two discrete states, where these variables can interact with each other, and the total energy of the system is given by *H*(*σ*) = - Σ*_{i,j}Jᵢⱼσᵢσⱼ* - *µ* ∑*ᵢ hᵢσᵢ.* In the Ising formulation, the binary variables (sometimes referred to as 'spins') are typically assigned to one of +1/-1, rather than 1/0 or any other binary assignment. However, the Ising formulation can easily be mapped to the QUBO formulation for Boolean variables, by applying the formula: *σᵢ* = 2*vᵢ* - 1.

Note that the notation used above is slightly different between the QUBO and the Ising formulation, with the variables to be assigned represented by *σ* and the interaction coefficients represented by J for the Ising model. For simplicity, in this application the notation σ will be used for variables to which values are assigned and J will be used to denote arrays of interaction coefficients in the context of an Ising solver. However, *Q* and *v* may also be used herein in general to denote a matrix of weights and a variable, respectively.

The second term -*µ* ∑*ᵢ hᵢσᵢ* in the above expression for the total energy represents the effect of an external 'field' or some external effect on the system being modelled. For example, in a ferromagnetic material, the first term represents the energy contribution for interactions between magnetic dipoles, while the second term represents the energy of the system due to an external magnetic field. Many problems are modelled as Ising problems without external fields, as it is much simpler to solve the Ising problem in the case of no external field. However, it is possible to convert a problem with an external field to a problem without an external field by introducing an extra spin and additional edges with weights chosen carefully. Any problems or models referred to as Ising problems in the description below assume no external field, or a problem already converted to one with no external field.

Until recently, algorithms for combinatorial optimization have typically been implemented in digital hardware, such as commodity CPUs, FPGAs, GPUs, and ASICs. Digital hardware has great advantages with respect to flexibility (i.e. the ability to program different algorithms), and reliability. However, digital solutions are also limited by the speed of execution and power consumption. In the past, improved computational power and reduced consumption could be achieved for each generation of digital hardware. It is widely predicted that improving performance of digital hardware will be increasingly difficult, as fundamental physical limits are approached. Searching for better answers for combinatorial optimization problems or tackling larger instances of those will come at a greater hardware cost.

However, more recently, there have been attempts to solve such problems using hardware based on non-digital physical processes. A popular realization of the Ising model with a physical process uses quantum annealers. In existing systems, the problem variables are represented by quantum bits, taking values +1 and -1, usually referred to as "spins". However, this topology does not allow full connectivity. Instead, the qubits interconnect in an architecture comprising sets of connected unit cells, each with four horizontal qubits connected to four vertical qubits via couplers. Unit cells are tiled vertically and horizontally with adjacent qubits connected, creating a lattice of sparsely connected qubits. The limited connectivity of this architecture has undesirable implications, resulting in inefficient representations of the problem variables into the spins, i. e. the number of the quantum bits required for the physical system to represent the problem is much higher than the original variable number.

Due to this inherent physical limitation of the quantum annealers hardware, algorithms have been developed which can run in classical hardware and are inspired by the physical properties of Quantum. For example, Microsoft Azure has developed Quantum Inspired Optimization (QIO) algorithms, which have shown good promise to approximate PUBO problems.

In an optical solver, light signals are used to represent the input variables (e.g. *σ*_{*i=*1...*N*} in the Ising problem), and an optical element is used to combine the signals in a way that models the interaction between the variables (e.g. the matrix J in the Ising problem). Optical elements that perform a vector-by-vector multiplication in the optical domain, such as a liquid crystal display or a ring-resonator, are known in the art. The summation (Σ) can be implemented using a photodetector that can perform coherent or incoherent addition of signals falling upon the photodetector's light sensing element.

In the cases where the inputs to the solver (i.e. the variables whose values are to be determined) can take binary positive and negative values, such as -1 and +1, or -1/2 and +1/2, then these are sometimes referred to as "spins" merely by analogy with the quantum property of spin. However in such a context, this does not actually mean the quantum property of spin. Instead the two possible "spin" values simply refer to two possible values of a binary variable, and could be represented using, for example, two different values of the amplitude, or phase, of the light.

State of the art solutions based or inspired in optics propose either digital approaches only (see Toshiba's Solving Traveling Salesman Problem with SBM [Simulated Bifurcation Machine], Ikuko Hasumi https://medium.com/toshiba-sbm/solving-traveling-salesman-problem-with-sbm-simulated-bifurcation-machine-89740c83ed37) or hybrid approaches, as per Böhm, Fabian, Guy Verschaffelt, and Guy Van der Sande. "A poor man's coherent Ising machine based on opto-electronic feedback systems for solving optimization problems." Nature communications 10.1 (2019): 1-9 (https://www.nature.com/articles/s41467-019-11484-3) and Inagaki, Takahiro, et al. "A coherent Ising machine for 2000-node optimization problems." Science 354.6312 (2016): 603-606 (https://science.sciencemag.org/content/354/6312/603).

In hybrid approaches, a building block to generate a signal representing the variable values is typically implemented in optical hardware, but the logic to compute the variable interactions is implemented using digital hardware and hardware to convert between optical and digital domains. By contrast, in 'all-analogue' solvers, non-digital hardware is instead used to convert a signal between optical (i.e. a light signal) and analogue electronic domains. An advantage of all-analogue solvers is the speed at which optical and analogue electronic signals can be transmitted (digital electronics are inherently much slower due to the need to clock sequences of bits through flip-flops). Whereas implementing part of the iteration in the digital domain defeats the point of an all-analogue solver, which is the speed of transmission compared to digital electronics. The speed of the system will be limited by the slowest part, so the inclusion of any digital electronics negates the benefit of optical solvers.

An all optical solution has been proposed and demonstrated with all-to-all connectivity for 4 spins/variables and partial connectivity for 16 spins/variables. (Marandi, A., Wang, Z., Takata, K., Byer, R. L. & Yamamoto, Y. Network of time-multiplexed optical parametric oscillators as a coherent Ising machine. Nat. Photonics 8, 937-942 (2014), K. Takata et al. "A 16-bit Coherent Ising Machine for One-Dimensional Ring and Cubic Graph Problems ", Scientific Report 2016. A 16-bit Coherent Ising Machine for One-Dimensional Ring and Cubic Graph Problems (europepmc.org)).

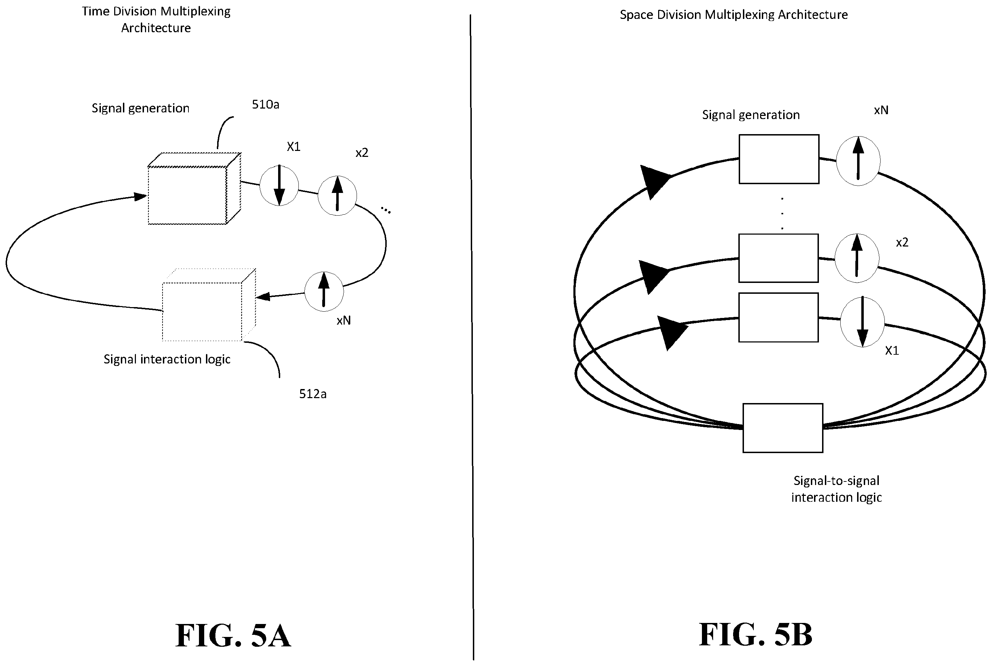

State of the art all-optical solvers generate variables using optical signals in a time-division multiplexing architecture. I.e. the signals are multiplexed in series into the same beam of light, and a different delay path is introduced for each variable so that the signals can then be combined in order to model the interactions between the variables. However, for time-division multiplexing, because spin generation is carried out in series, the time complexity of the solver is linear in the number of variables being modelled. Figure 5A shows a schematic block diagram of a time-division multiplexing architecture. For a time-division architecture, each of the 'spins' are generated in series, and delayed by different path lengths in order to be able to implement the interaction between them. This means that a single iteration must wait for all spins to be generated before computing the interaction between spins and passing the feedback to the spin generation.

Solvers which are implemented wholly in the analogue domain use optical or analogue electronic vector multipliers to model the 'spin' interactions of Ising systems. Implementing optical vector multipliers has the advantage pointed out above, that it leverages the speed of optical transmission.

US 2021/036783 discloses a method for performing signed matrix operations using a linear photonic processor are provided. The linear photonic processor is formed as an array of first amplitude modulators and second amplitude modulators, the first amplitude modulators configured to encode elements of a vector into first optical signals and the second amplitude modulators configured to encode a product between the vector elements and matrix elements into second optical signals. An apparatus is used to implement a signed value of an output of the linear processor. The linear photonic processor is configured to perform matrix-vector and/or matrix-matrix operation.

"Integrated Coherent Ising Machines Based on Self-Phase Modulation in Microring Resonators" (Nikolas TEZAK et al, IEEE Journal of Selected Topics in Quantum Electronics, Vol. 26, no. 1, ISSN 1077-260X, DOI 10.1109/JSTQE.2019.2929184) proposes an integrated photonic circuit that acts as an optical coherent Ising machine and simulate its performance on some example problems. In contrast to previous all-optical approaches, the proposed integrated Ising machine does not require an optical parametric oscillator and can hence operate at a single wavelength, reducing the overall design complexity. Tezak et al present as a building block a symmetric nonlinear photonic device that can use self-phase modulation in two microring resonators to emulate a continuously tunable, symmetrically bistable Ising node.

### Summary

A challenge with optical vector multipliers is that the optical signal representing the multiplication result should be detected to determine a numerical value of the signal. Existing optical vector-by-vector multipliers typically use coherent detection, which enables both the phase and the amplitude of the output signal to be measured. However, in practice, coherent detection schemes are complex to implement, and often require digital signal processing. However, some applications require all processing to occur in the optical or analog electronic domain due to the speed and efficiency of optical and electrical signal transmission, such that coherent detection is not possible.

An alternative detection scheme which may be used to detect optical signals is direct detection, which directly measures the intensity of a light signal using a photodetector, such as a photodiode. However, for detection of real-valued signals, i.e. signals which can take either positive or negative values, direct detection converts any negative signals to positive values, since light intensity can only be positive.

The present disclosure relates to a direct detection scheme for detecting real-valued results of optical vector-by-matrix multiplications. Direct detection allows detection of amplitude-modulated optical signals by directly measuring their intensity. Direct detection may also be referred to herein as an 'incoherent' detection, to distinguish it from coherent detection methods. While direct detection of intensity causes all phase information to be lost, the use of amplitude modulation means that the value of the multiplication result can be determined accurately without detecting phase information. In order to capture both positive and negative values of the multiplication result, the direct detection scheme subtracts a DC offset from the output of the detector to transform it to a certain range. This allows detection of real outputs of a vector multiplication which may take either positive or negative values, where direct detection of light intensity alone can take only positive values.

In some embodiments, the direct detection scheme is used to detect optical signals as part of an all-analog solver architecture which solves binary optimization problems, wherein the optical signals encode a 'spin' variable in their amplitude which must take both positive and negative values, and wherein the update of optical signals is determined at least in part by a vector multiplication result which updates the 'spin' value in a particular direction, the direction of the update determined based on the sign of the multiplication result. The multiplication result when detected directly at a photodetector can only be positive, so a DC term is added to ensure that the multiplication result and the optical signal representing the 'spin' can take both positive and negative values.

According to a first aspect disclosed herein there is provided a system for performing vector multiplication using optics, the system comprising one or more channels. Each comprises: a respective light signal generator comprising a light source configured to generate a respective optical signal, and a modulator arranged to modulate the amplitude of the respective optical signal to model a value of a respective variable from a vector of variables. Each channel also comprises: a respective optical vector multiplier arranged to receive a vector of optical signals including the respective optical signal, and multiply the vector of optical signals by a respective vector of weights in the optical domain, the weights modelling interactions between the variables of the vector of variables; and a respective light detector arranged to detect an intensity of a resulting output of the respective optical vector multiplier by incoherent detection, thereby generating an analogue intensity signal modulated on a scale that can only take positive values. The system is characterized in that each channel further comprises: a respective analog DC offset generator configured to generate a respective DC offset signal encoding a constant DC term for the respective light detector; and a respective differentiator configured to subtract the respective DC offset signal from the analogue intensity signal, resulting in a respective output signal in the form of analogue electronic signal modulated on a scale having positive and negative values.

According to another aspect disclosed herein, there is provided a corresponding method of performing vector multiplication using optics.

### Brief Description of Figures

For a better understanding of the present disclosure, and to show how embodiments of the same may be put into effect, reference is made to the accompanying figures in which:
Figure 1 shows a schematic block diagram of an example optical solver architecture for quadratic unconstrained binary optimization problems;
Figure 2 shows a schematic block diagram of the hardware implementation of one channel of an optical solver architecture;
Figure 3 shows a schematic block diagram of the spin generation hardware;
Figure 4 shows a schematic block diagram of signal conversions between the analogue and optical domains during operation of the solver;
Figures 5A and 5B respectively show examples of time division and space division multiplexing architectures;
Figure 6 shows the use of a direct detection scheme with adaptive DC term;
Figures 6A and 6B show schematic block diagrams of direct detection with an offset term and differential detection, respectively;
Figure 7 shows a schematic diagram illustrating the concept of optical vector multiplication;
Figure 8 shows the operation of a wavelength selective switch to carry out optical vector-by-vector multiplications; and
Figure 9 shows the operation of a modified wavelength selective switch architecture to carry out optical vector-by-matrix multiplication.

### Detailed Description

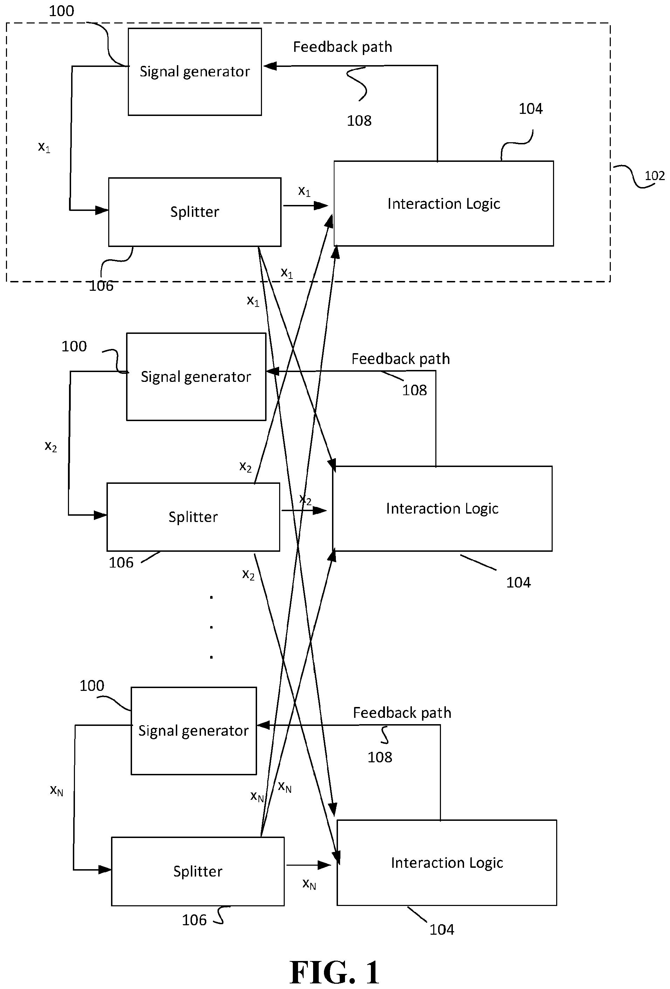

Figure 1 shows a schematic block diagram of an optical solver architecture configured to solve combinatorial optimization problems. Note that 'solving' an optimization problem herein covers the possibility of finding an approximate solution. The following description will focus on problems which model interactions of two variables, such as the Ising problem described above. However, note that higher-order PUBO problems, which model interactions between three or more variables, can be transformed to QUBO problems, albeit with a higher number of variables, and use the same optical hardware to solve them. As described above, the goal of such problems is to find an assignment of variables that minimize a particular function specific to the problem. The function to be minimized in the optimization may be referred to herein as an 'energy' to reflect the total energy which takes this form in certain physical systems, such as the Ising model for ferromagnetism.

A general combinatorial optimisation problem can be solved by first mapping said problem to a QUBO problem, which can then be mapped to an Ising problem. For many problems, there is a known mapping to the QUBO formulation. For others, a mapping may have to be derived. The mapping of general NP-hard problems to a QUBO or Ising formulation is a topic that, in itself, will be understood by a person skilled in the art of mathematics. For example, a problem expressed in PUBO form, for example a cubic unconstrained binary optimization problem with the formula ∑*ᵢⱼₖ Qᵢⱼₖvᵢvⱼvₖ* , may be expressed as a QUBO problem by introducing extra variables and terms, and may thus be solved by the Ising solver disclosed herein. The solver disclosed herein provides a solution to an Ising problem, which can be used solve any NP-hard problem for which a mapping to that problem can be found.

In doing this, the problem is mapped to a physical system whose total energy is given by the Ising Hamiltonian, i.e. *-* ∑*_{i,j}Jᵢⱼσᵢσⱼ* (assuming no external field). To map the given problem to an Ising system, the matrix J needs to be determined such that minimizing the total energy - Σ*_{i,j}Jᵢⱼ · σᵢ* · *σⱼ* (i.e. maximizing ∑*_{i,j}Jᵢⱼ* · *σᵢ · σⱼ* ) is equivalent to optimizing the problem.

The Hamiltonian is therefore a sum of a plurality of terms *Jᵢⱼ* · *σᵢ* · *σⱼ*, each being a product of a respective subset of the variables *σᵢ , σⱼ* with a corresponding weight *Jᵢⱼ.* (so the first term is the subset of one variable *σ₁* multiplied with itself and the weight *J₁₁,* and the second term is the subset *σ₁* , *σ*₂ multiplied together and with the weight *J₁₂,* etc.).

As can be seen, this sum can be broken down into a series of vector-by-vector (dot product) multiplications, by taking *σᵢ* out to the left of the sum: $\begin{matrix}{\sum }_{i , j} {J}_{ij} ⋅ {σ}_{i} ⋅ {σ}_{j} \\ = {\sum }_{i} {σ}_{i} {\sum }_{j} {J}_{ij} ⋅ {σ}_{j} \\ = {\sum }_{i} {σ}_{i} \left(\begin{matrix}{J}_{i 1} \\ ⋮ \\ {J}_{iN}\end{matrix}\right) ⋅ \left({σ}_{1} … {σ}_{N}\right) \\ = {σ}_{1} \left({σ}_{1}{J}_{11}+{σ}_{2}{J}_{12}+⋯+{σ}_{N}{J}_{1 N}\right) \\ + {σ}_{2} \left({σ}_{1}{J}_{21}+{σ}_{2}{J}_{22}+⋯+{σ}_{N}{J}_{2 N}\right) \\ … \\ = {σ}_{N} \left({σ}_{1}{J}_{N 1}+{σ}_{2}{J}_{N 2}+⋯+{σ}_{nN}\right)\end{matrix}$

In this final representation, the sum in each line is an individual vector multiplication which represents a contribution of a different respective one of the variables *σᵢ* to the energy in the Hamiltonian. I.e. the vector multiplication (σ₁*J*₁₁ + σ₂*J*₁₂ + ··· *+ σ_{N}J*_{1*N*}) is the contribution of *σ₁* toward the energy, and (σ₁*J*₂₁ + σ₂*J*₂₂ + ··· *+ σ_{N}J*_{2*N*}) is the contribution of *σ*₂, etc. the weights *J* represent the interactions between variables (so *J₁₁* is the interaction of *σ₁* with itself, *J*₂₂ is the interaction between *σ₁* and *σ₂*, etc.). The weights are set depending on the problem being modelled (and for any given problem some weights may be zero). In the system of Figure 1, the contribution of each variable is modelled by a different respective hardware channel 102, as will be discussed in more detail shortly. In each channel 102, the respective variable *σᵢ* is modelled by a respective signal x, e.g. an optical signal, which is generated by a respective signal generator 100. The signals x are shared between channels by splitters 106, and a respective vector multiplier 104 in each channel 100 performs the respective vector-by-vector multiplication (VVM) to determine the respective contribution (*σ*₁*J*_{*i*1} + σ₂*J*_{*i*2} + ··· *+ σ_{N}J_{iN}*) of the respective variable being modelled by the respective channel 100.

An example application is the travelling salesperson problem. In a simple example, imagine there are three cites the salesperson needs to visit: London, Edinburgh and Cardiff. These can be modelled with nine variables in a QUBO problem: *v₁* represents London being visited first, *v₂* represents London visited second, *v₃* represents London third, *v₄* represents Edinburgh first, *v₅* represents Edinburgh second, *v₆* represents Edinburgh third, *v₇* represents Cardiff first, *v₈* represents Cardiff third, and *v₉* represents Cardiff third. The elements of the matrix *Qᵢⱼ* represent the penalties of travelling between corresponding pairs of cities. So *Q₁₅* (London first and Edinburgh second) is the distance penalty for London to Edinburgh, etc. Note that some weights, such as *Q₁₉* (London first then Cardiff third) are set to zero since they are not meaningful in this problem as the total distance is determined by the distances between consecutive cities only. Other weights, such as such as *Q₁₂* or *Q₁₃* (London first then London second, or London first then London third) may be set to large penalty values so as to impose the constraint that each city is visited once. The QUBO problem (minimizing ∑*ᵢ* ∑*ⱼ Qᵢⱼ* · *vᵢ* · *vⱼ*) can then be transformed into an Ising problem (minimize the energy in the Hamiltonian term - ∑*_{i,j}Jᵢⱼσᵢσⱼ* ) and solved using the solver system of Figure 1.

Another example is a molecular similarity problem for estimating the molecular similarity between two molecules. E.g. this could be used to estimate that one molecule is likely to block another for use in a drug. Modelling molecular similarity as a QUBO problem is, in itself, known in the art.

An update rule may be derived for adapting the signals generated by the system in the direction that minimizes the Hamiltonian of the Ising system modelling the problem. A possible update equation for the Ising model may be written as follows: ${x}_{i} \left[k+1\right] = {cos}^{2} \left(α∗{x}_{i}\left[k\right]+β∗{\sum }_{j} {J}_{ij} ∗ {x}_{j} \left[k\right] - \frac{π}{4} + {ζ}_{i} \left[k\right]\right) - \frac{1}{2} ,$ (1)
where *xᵢ* is the value of the modelling signal generated by the system to model the variable *σᵢ* in the Ising model. This update equation is derived from the Hamiltonian of the Ising model. To derive the update equation, the update of each spin may be defined based on the expected effect that changing that spin's value has on the total energy. This can be used to derive an expression for the update of: ${x}_{i} ← {x}_{i} + tanh \left(-\frac{1}{2}\left({\left.H\right|}_{\left〈{x}_{i}\right〉 = 1}-{\left.H\right|}_{\left〈{x}_{i}\right〉 = - 1}\right)\right) ,$ (2)
where the inside of the brackets above can be evaluated as 2 ∑*ⱼJᵢⱼ*〈*xⱼ*〉*.* The terms of the update may be multiplied by constants *α* and *β* in order to control the size of the update of each spin at each iteration to ensure the system as a whole is adapted towards a minimum. The ζ term in the above equation is Gaussian noise, applied at each iteration to perturb the system to avoid getting 'stuck' at a non-optimal solution. Finally, the cos²() term in equation 1 may be derived by observing that the Taylor expansion of ${cos}^{2} \left(x-\frac{π}{4}\right) - \frac{1}{2}$ is approximately equal to the update equation above for appropriately chosen constants *α* and *β*. Cosine squared is a useful approximation for optical spin generation in particular, due to specific hardware that can readily compute this function, described later. However, a different approximation may be made to evaluate other approximations of Equation 2 above. For example, analogue electronic components may be used to evaluate terms of a Taylor expansion of Equation 2 directly and generate an analogue signal for the updated value of *xᵢ*. For example a cubic or quintic approximation of equation 2 could be used (an expansion only up to the cubic or 5^{th}-order term, respectively). Indeed the reason for using cos²(x-π/4)-1/2 in equation (1) is because it approximates to x-x³for small enough x. In other examples, any other formula that provides similar approximation (i.e. it is linear for x around 0) could also work.

As shown in Figure 1, to be discussed in more detail shortly, each modelling signal *xᵢ* modelling a respective variable is generated by a respective signal generator 100 (e.g. optical signal generator) in a respective channel 102. The interactions between variables, corresponding to the matrix *J*, are modelled by the interaction logic 104.

The above formula will be described in further detail later. Other formulations are possible. Whatever formulations are used, the underlying property of the update equation is that it pushes or adapts the signals *xᵢ* such that the physical system being modelled tends towards a minimum energy (i.e. the minimum of the Hamiltonian given above). This is driven by the term *β* ∑*ⱼJᵢⱼxⱼ*[*k*], which represents a contribution of the given signal to the energy of the overall system, and whose sign determines the direction of the update. In other words, this term provides feedback to the signal generator 102 to adapt the respective modelling signal *xᵢ* in the respective channel 102. The sign of this feedback causes an adaptation in the respective modeling signal (x) which drives that signal in a direction which reduces the overall energy in the Hamiltonian of the system. A value of this feedback determines the degree of the adaptation (optionally damped relative to the signal x by the coefficients *α* and*β*).

Note that, while the solver determines signals directly representing Ising variables *σᵢ*, this is equivalent to finding an optimal mapping of the QUBO variables *vᵢ*, and may be transformed into a different set of variables in the form of the original problem. However, it is important that a mapping exists between a set of Ising variables (spins) which can be determined by the solver and a set of variables optimizing the original problem. Note that in the below description, either of *vᵢ* or *σᵢ* may be used to denote a binary variable modelled by the solver.

An all-analogue solver can be implemented which models the value of the binary variables *σᵢ* as optical or electrical analogue signals, and which performs the above update for each modelled variable using a combination of non-digital hardware components. The solver generates an initial set of signals representing a given assignment of variables and generates new signals in a series of iterative steps based on a feedback signal computed using interaction logic implemented in analogue electronic or optical hardware. An example implementation of a solver architecture for an Ising problem is described in more detail later.

There are many choices of solver configuration which may be arranged according to the present disclosure, each configuration generating a feedback signal which encourages the signals generated over time into a set of signals which minimize the total energy of an 'Ising' system, which can be mapped to an optimal assignment of variables for the given problem definition.

The present disclosure provides a novel architecture for solving combinatorial optimization problems which can be mapped to Ising problems of *N* variables (sometimes referred to as 'spins'), wherein the variables of the problem are modelled by a set of *N* distinct hardware channels, and updated iteratively based on feedback provided by signal interaction logic modeling the interaction of the variables according to the given problem definition. The system occurs only in the optical and analogue electronic domains, and the signal interaction logic may be modelled by either optical or analogue electronic hardware. This will now be described in further detail with reference to Figure 1.

Figure 1 shows an example schematic block diagram of an analogue solver for combinatorial optimization problems. The architecture comprises N channels 102, each channel i configured to compute a channel feedback signal according to a feedback equation derived for each channel, where the feedback for each channel tends to a set of variables that minimize the 'energy' function defining the problem.

A first channel 102 is configured to compute a modelling signal *x*₁ corresponding to an Ising variable *σ*₁ taking either a positive or a negative "spin" value, with the modelling variable *x*₁ updated based on the feedback received at each iteration of the optimization. Note that while the variable *σ* being modelled may be binary, the modelling signal x may take a soft value that can vary between the two possible binary values of the variable. The process of determining the contribution by each channel will now be described. Note that each channel comprises hardware components which carry out the same steps to compute its respective contribution to the function.

Each channel 102 comprises a signal generator 100, a splitter 106 and signal interaction logic 104, each of which may comprise one or more hardware components. Note that 'logic' as used herein in this context does not refer to digital logic, but rather refers to signal operations carried out using analogue or optical hardware. The signal generator 100 generates a modelling signal for *σᵢ*, with a measurable property of the signal representing a binary value of the variable *σᵢ*. The signal may, for example, be an optical signal generated by a light source such as a laser. An optical modulator may be used to modulate a property of the optical signal to model the variable *σᵢ*. For a binary variable *σᵢ* to be encoded in the value of a property such as amplitude, a mapping should be defined between the possible modulated property values (amplitude) and the binary values (e.g. 1 and -1). For example, *xᵢ* may lie in the range between [*-a, +a*], where *a* is some constant, and where a positive amplitude maps to an Ising variable *σ* = 1, and a negative amplitude maps to an Ising variable *σᵢ* = -1. Once a modulated signal modelling the variable *σᵢ* has been generated (this may be referred to herein as a 'modelling signal' *xᵢ* ), this signal can be copied by applying a splitter 106, to generate multiple instances of that modelling signal *xᵢ* encoding the same variable *vᵢ*, which can be communicated to other channels as shown by the arrows in Figure 1.

The signal interaction logic 104 receives multiple modelling signals, representing a vector of variables, with each signal received from the splitter 106 of a respective channel *j*. The interaction logic 104 comprises a vector-by-vector multiplier that combines the modelling signals *xᵢ* into a signal representing a weighted sum of the modelled variables, with the weights corresponding to the relevant elements of the matrix *J* defining the spin interaction for the Ising problem. There are various possible hardware configurations that may be used to perform vector-by-vector multiplication. One example disclosed herein is a wavelength selective switch (WSS). This is described in further detail later. Optical vector-by-vector multiplication may alternatively be carried out by other, known optical technology including spatial light modulators (SLM), ring resonators or Mach-Zehnder interferometers (MZIs), or some combination of such technologies or other suitable optical components. As another alternative, the vector-by-vector multiplication operation may also be implemented in the analogue electronic domain (i.e. using electrical signals), for example by using memristors.

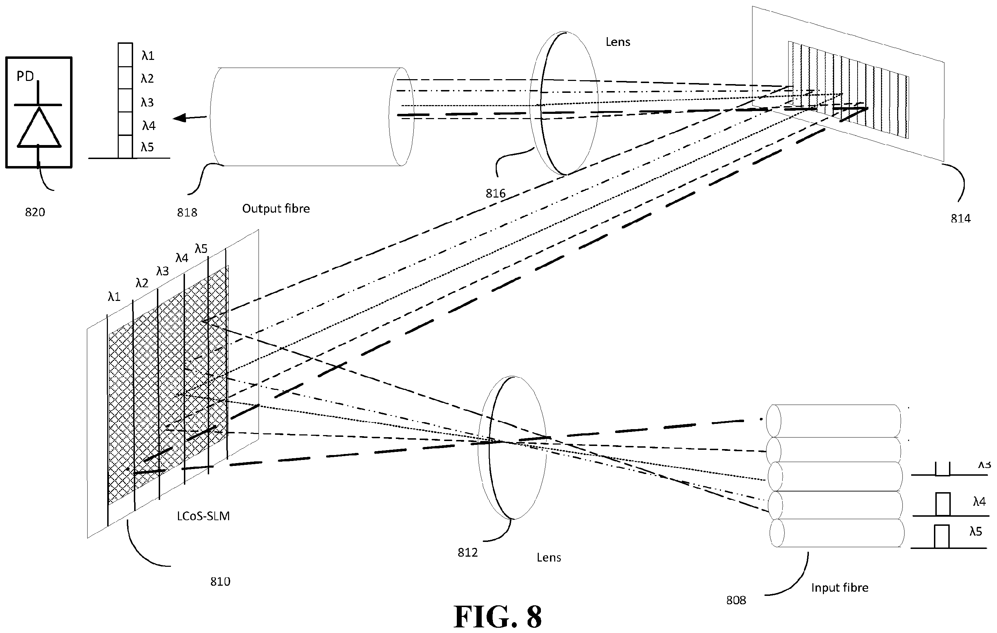

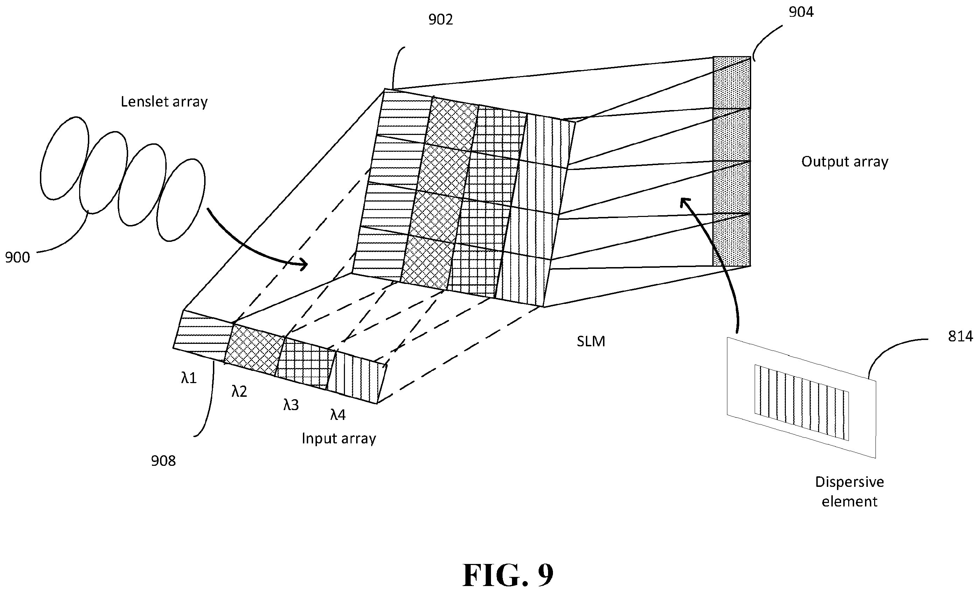

Note that, while Figure 1 shows a separate interaction logic 104 for each channel, this interaction logic does not necessarily comprise a separate hardware component for computing signal interactions for each channel. In some embodiments, the interaction logic of the whole system comprises a global vector-by-matrix multiplier. In this case, the part of the vector-by-matrix multiplier carrying out the vector-by-vector multiplication for the given channel corresponds with the interaction logic for that channel shown in Figure 1. E.g. each interaction logic may correspond to a different row of a 2D spatial light modulator, as will be discussed in more detail later with reference to the example of Figure 9. Note also that more generally, the physical parts of the global vector-by-matrix multiplier implementing the different individual interaction logic blocks 104 may or may not overlap with one another. In other embodiments on the other hand, a distinct hardware component is configured to perform vector-by-vector multiplication for each channel. The effect of both architectures is the same. Both of these alternative architectures are discussed in more detail below, in the context of a wavelength selective switch implementation of a vector-by-vector (or vector-by-matrix) multiplier, shown in Figures 8 and 9.

The feedback signal is passed back along a feedback path 108 to the signal generator 104, which determines a new signal according to the hardware of the system. The updated signal may be generated, for example, by passing the feedback signal to a modulator to modulate the input signal from a light source, and detecting the resulting optical signal with a photodiode. Alternatively, in some embodiments, an analogue electronic signal encoding the feedback signal may be generated directly using analogue electronic components, for example, by using memristors. Either way, the system is designed such that over time it tends to a stable state which maps to an optimal assignment of the variables which minimize the energy function for the given problem formula.

Each channel updates its signals according to the same scheme described above, until a stable state is reached for all signals, corresponding to a particular assignment of variables to values. The pairwise interactions of an arbitrary number of variables σ₁, ..., *σ_{N}* may be modelled in this way, by setting up N channels and splitting each signal to N identical copies of the signal, one to be sent to each channel.

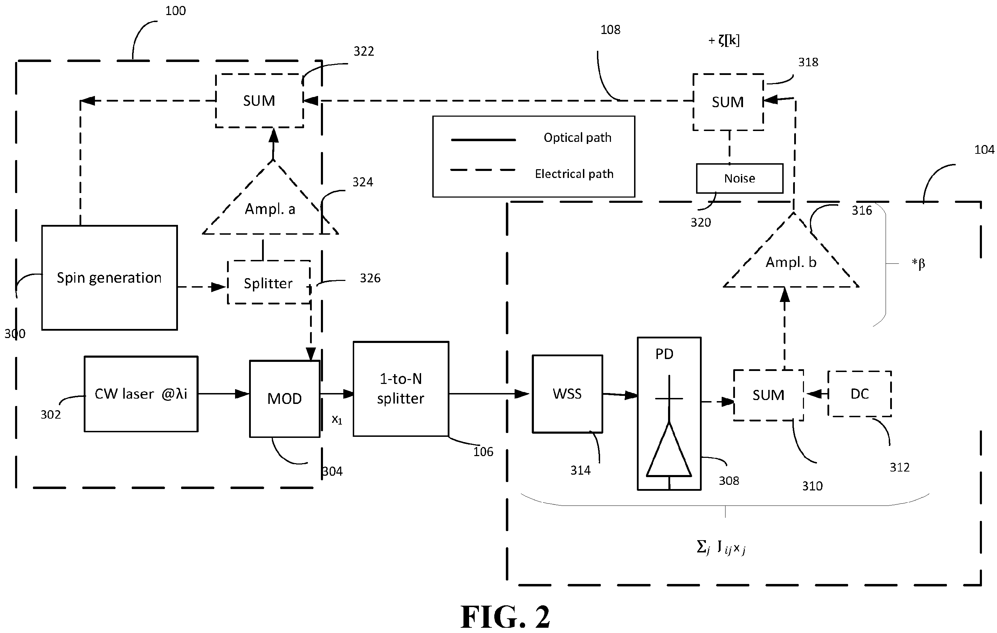

Figure 2 shows an example optical solver for Ising problems of N variables implemented in optical hardware. The solver comprises N channels 102, each channel i comprising hardware implementing a signal generator 100, splitter 106 and interaction logic 104 to generate a signal which is representative of a binary value assigned to variable i. For clarity, Figure 2 shows a schematic diagram of only a single channel 102, but this may be duplicated in each of the channels 102. Note that modelling signals are output by the splitter 106 of Figure 2 to all other channels, and received interaction logic 104 from each of the other channels.

Each channel 102 iteratively generates an updated modelling signal *xᵢ* according to a feedback signal until the system settles into a stable set of states, representing an optimal assignment of variables according to the optimization problem to be solved. As described above, an update of the signal is given by the update equation, for example: ${x}_{i} \left[k+1\right] = {cos}^{2} \left(α∗{x}_{i}\left[k\right]+β∗{\sum }_{j} {J}_{ij} ∗ {x}_{j} \left[k\right] - \frac{π}{4} + {ζ}_{i} \left[k\right]\right) - \frac{1}{2}$
where *xᵢ*[*k*] is the modelling signal at the *k^{th}* iteration, *Jᵢⱼ* is the coefficient defining the interaction between the *i^{th}* and *j^{th}* variables according to the given problem as mapped to an Ising system, *α* and *β* are multiplicative constants, and *ζᵢ*[*k*] is a Gaussian noise term. The factors *α* and *β* are chosen so as to control the size of the update of each variable, where a large *α* relative to *β* causes the signal to move slowly in the direction given by the *β* term, i.e. *β ** ∑*Jᵢⱼxᵢⱼ*[*k*]. This is important in a system of many variables, as large updates at each step can prevent convergence of the full system to a suitable local optimum. Similarly the noise term provides a perturbation to the signal at each step to ensure that the system does not become 'stuck' in a local minimum that is a poor approximation of an optimal set of variables. The above equation may be derived mathematically by applying known principles based on the Hamiltonian of the Ising model and using sensible approximations. In particular, the cos²() term approximates the optimal update, which is easily applied using particular optical hardware, described later. The operation of a single channel 102 will now be described with reference to Figure 2.

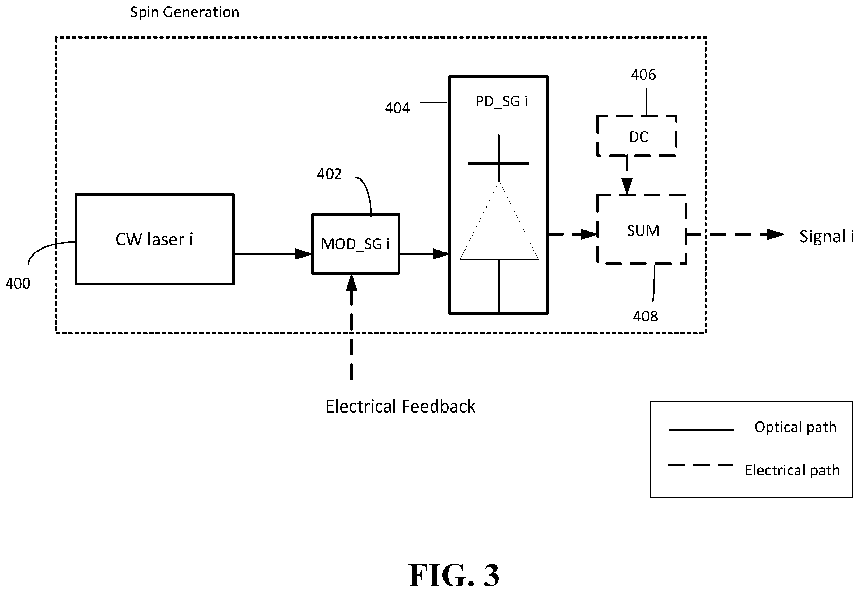

An initial signal is generated by the spin generation hardware 300 representing an initial binary value of the variable *σᵢ* modelled by the given channel. Note that 'spin' is used herein to refer to a signal representing a binary variable of an Ising system, and should not be confused with the quantum mechanical definition of spin. An example implementation of the hardware components of the spin generation hardware 300 are described in more detail below, with reference to Figure 3. The signal output by the spin generator is sent as an electrical signal, as shown by the dashed arrow from the spin generation hardware 300, to a splitter 326, which sends the signal over two different paths.

Note that in this embodiment, the spin generator 300 comprises only part of the signal generator 100 of Figure 1. In the example architecture of Figure 2, the signal generator 100 comprises a spin generator 300, optical source 302, modulator 304, splitter 326, amplifier 324 and analogue hardware 322 to sum electrical signals. As described above, the output of the signal generation 100 is a modelling signal *x*₁.

Along the first path, the signal is combined with the output of a light source 302, which is a laser at a specific wavelength, in a modulator 304 to modulate the laser beam, thereby generating a modelling signal *xᵢ*, as described above with reference to Figure 1. The modulator 304 modulates the optical signal to encode the electrical signal modelling the variable, and uses the amplitude of the optical signal. As mentioned above, a mapping should exist between a measurable property of the optical signal and a binary variable, such that the detected optical signal can encode both positive and negative values. A form of direct detection is used, which may be referred to herein as 'differential detection'. This is described in more detail below.

The modulator 304 sends the modelling signal to a 1-to-N splitter 306, which communicates an identical optical signal to a vector-by-vector multiplier 314 (VVM) in each of the N channels of the system. In the example of Figure 2, the vector-by-vector multiplier 313 is implemented as a wavelength-selective switch. However, in other embodiments, this may be implemented by a ring resonator, spatial light modulator or Mach-Zehnder interferometer (MZI), or analogue electronic components. Note that in embodiments, such as those that employ a WSS, the signal generated at each channel may be generated at a different wavelength (i.e. color) to enable the interaction of the different signals in a vector by vector multiplication without causing interference between the *N* signals. The VVM 314 is configured to multiply the input set of signals {*x₁*, *...* , *x_{N}*} representing a vector of variables {*σ*₁, ..., *σ_{N}*} by a corresponding subset of elements of a matrix J. For a given channel i, the wavelength selective switch calculates a signal representing the vector-by-vector term of Eq. 1 for each iteration *k,* i.e. ∑*ⱼJᵢⱼxⱼ*[*k*], where *xⱼ*[*k*] is the signal generated at signal generation hardware for channel *j.* The operation of a wavelength selective switch to compute a vector multiplication is described in further detail later.

The signal output by the VVM 314 remains in the optical domain, as shown by the unbroken lines in Figure 2, and this signal is converted to an electrical signal by detecting it at a photodetector.A direct detection scheme is used and an adaptive direct current (DC) term 312 is added to achieve a differential detection using analogue hardware 310 configured to perform a sum. The amplifier 316 multiplies the adapted sum by a constant *β*, outputting a feedback path 108. The $- \frac{π}{4}$ term of Equation 1 is implemented in hardware by setting the modulator at a specific operation point. A Gaussian noise term 320 (corresponding with *ζ*[*k*] in Eq. 1) is added to the feedback signal by analogue hardware 318 configured to perform addition of electrical signals, such as an electronic mixer. A Gaussian distribution may be defined, from which the Gaussian noise term *ζ*[*k*] may be sampled at each iteration. Hardware for adding electrical signals is well known in the art and will not be described further herein. *ζ*[*k*] is assumed to be small random (gaussian) noise. In each iteration, ζ[k] takes takes a new value (from the same distribution).

Along the second path, the signal i is output to an amplifier which amplifies the electrical signal, representing the multiplication of the variable *σᵢ* by a constant *α*, shown in Eq. 1. This is added to the sum $β ∗ {\sum }_{j} {J}_{ij} {x}_{j} \left[k\right] - \frac{π}{4} + ζ \left[k\right]$ which is communicated along a feedback path from the analogue addition hardware 318, to obtain a signal $α ∗ {x}_{i} \left[k\right] + β ∗ {\sum }_{j} {J}_{ij} {x}_{j} \left[k\right] - \frac{π}{4} + ζ \left[k\right]$ . Finally, the updated signal is determined in the spin generation hardware 300, which modulates an optical signal based on the feedback signal 108 to compute a cosine of the feedback signal, detecting this signal at a photodetector and adding a second adaptive term, in order to evaluate the full expression of Eq. 1 and output an analogue electronic signal. Note that direct detection by the photodetector generates the square of the cosine in Eq. 1, as the photodetector measures intensity of the optical signal which is proportional to the square of the signal itself. For this reason, direct detection cannot be used for phase-modulated signals, as all phase information is lost in the detection of light intensity.

An example of the evaluation of the update equation by the spin generator 300 is described below with reference to Figure 3. This process is repeated at each iteration, generating an updated signal for each channel, determining the interaction of the N signals, computing a new feedback signal and repeating until the system stabilizes.

Note that multiple components operating together in Figure 2 correspond to the general signal generator 100 described above with reference to Figure 1. The signal generator 100 in this implementation comprises all of the spin generation hardware 300, laser 302, analogue addition hardware 322, splitter 326 and modulator 304. Similarly, the interaction logic 104 described above with reference to Figure 1 comprises both a vector-by-vector multiplier implemented in a wavelength selective switch as well as analogue hardware components to perform addition and amplification of the feedback signal. Other embodiments may include further hardware to carry out operations on optical or analogue signals, including photodetectors and modulators, for example.

Each channel i is implemented in hardware which computes updates to that channel's signal in parallel. Updates continue until the system is stopped, for example after a predetermined stopping point of M iterations. Alternatively, the signals may be measured periodically, and the system stopped if there are no changes observed between subsequent measurements. An approximate solution is found when the system stabilizes, i.e. the set of variables modeled by the generated signals stays constant from one iteration to the next. This stable set of signals may then be mapped directly to an assignment of N variables which approximate the solution for the given Ising problem.

The example embodiment shown in Figure 2 uses a space division multiplexing architecture (i.e. where each variable is generated in separate hardware), with binary variables encoded in the signal amplitude, and a VVM implemented by a wavelength selective switch in each of a plurality of parallel hardware channels. However, alternative non-claimed embodiments may model variables using a different measurable property of the signal such as phase or frequency and may also use other types of VVMs such as ring resonators, Mach Zehnder interferometers, or electronic VVMs implemented using memristors. It is also possible to use time division instead of spatial division, using delay lines to combine the time-division multiplexed signals.

Figure 3 shows a schematic block diagram of an example spin generation hardware component 300. A light source 400, such as a continuous wave laser at a specified wavelength, is used to generate an optical signal which is passed to a spin generation modulator 402 to generate a spin. An electrical feedback signal based on the signals generated at the previous iteration is also received from the VVM 315 of the interaction logic 104 to the modulator 402. The modulator 402 modulates the optical signal from the light source 400 according to the electrical feedback signal. The modulator 402 may be a Mach-Zehnder modulator, which split the input signal to be interfered with itself. A value corresponding to the feedback signal is set within one of the arms by a modulator and the output of the modulator 402 is the in-phase component of the interfering electrical fields - in other words, the *cos*() function of Eq. 1 applied to the feedback signal, which becomes cos²() when detected as the light intensity at the photodetector 404. Detection at the signal generation photodetector 404 converts the resulting signal back to the analogue domain. For direct detection of the light intensity using a photodetector 404, the signal is always positive and within the range of [0,1] given by the cos²() function. An adaptive DC term 406 representing an additive term of the equation, i.e. the -1/2 term in Equation 1, may be added to the positive signal to convert the range of the signal to [-1/2,1/2] to appropriately model Ising variables. The output signal is then passed to the splitter 306 to generate the modelling signal *xᵢ* to be input to VVMs of other channels, as described above with reference to Figure 2.

During each iteration of the example solver shown in Figure 3, the signal is converted from the optical domain to the analogue domain and vice versa twice. As shown in Figure 3, while the feedback signal is initially converted by the signal generator 300 to an optical signal, it is then detected at a photodetector converting this back into an analogue signal. Modulators are used with light sources to convert the signal from the analogue domain to the optical domain to be processed by optical signal interaction logic, while photodetectors are used to convert the output signals of the interaction logic from the optical domain back to the analogue domain.

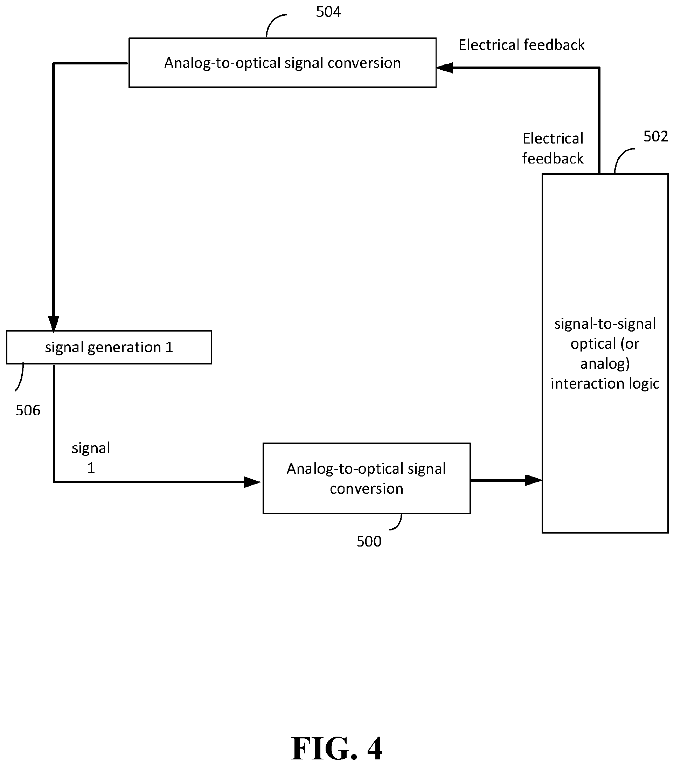

Figure 4 shows a schematic block diagram of the conversion of a signal between optical and analogue domains for one channel in the example solver described above and shown in Figure 2, comprising N hardware channels. The spin generation component 300, described above with reference to Figure 3, outputs an electrical signal, denoted 'signal 1' in Figure 4. In the present example solver, the signal interaction logic comprises an optical vector-by-vector multiplier 314, e.g. in the form of a wavelength selective switch, which acts on optical signals. However, as noted above, the interaction logic of any given channel may comprise a part of an overall signal interaction hardware implementing vector-by-matrix multiplication to produce a vector of feedback signals for multiple channels. An example of this architecture is described in more detail below, with reference to Figure 9. A first analog-to-optical signal conversion 500 occurs after the signal is generated to pass an optical signal to the signal-to-signal interaction logic 502. The vector-by-vector multiplication result is evaluated by detection at a photodetector 308, converting the signal to the optical domain and further arithmetic operations are carried out in the analogue domain, as shown in Figure 2.

The signal-to-signal interaction logic 502 of Figure 4 comprises both the optical VVM operation and the conversion to an electrical feedback signal. The output electrical feedback signal is then passed through a second analog-to-optical signal conversion 504, where the electrical feedback signal is converted back to an optical signal by a modulator. In Figures 3 and 4, this occurs within the spin generation hardware 300, where the spin generation light source 400 and modulator 402 convert the electrical feedback signal into an optical signal. The signal generation 506 of Figure 4 corresponds only to the detection of the signal generated by the signal generation hardware 300, which converts the signal from the optical to the analogue domain, rather than the full signal generation process described in Figure 3.

Note that in the example embodiment described above, the vector-by-vector multiplication operation of the signal interaction logic 504 is implemented in the optical domain, e.g. by a wavelength selective switch, described later. However, in other embodiments, the signal interaction may be implemented in the analogue electronic domain. Similarly, in some embodiments, other arithmetic operations such as addition of signals, may be carried out in the optical domain rather than the analogue electronic domains. The process shown in Figure 4 is thus specific to the particular hardware configuration used to implement the solver shown in Figure 2.

As described above, an advantage of an architecture described herein is that it uses a 'space-division' multiplexing architecture, meaning that a system of N variables is modelled using separate hardware for each variable. Some state-of-the-art solvers, by contrast, use a time-division multiplexing architecture. Figure 5A shows an example architecture which uses time-division multiplexing. Time-division multiplexing architecture uses a single set of signal generation hardware 510a for generation of signals representing all variables of the system, and a single piece of hardware implementing signal interaction logic. The signal generation hardware 512a generates signals at time intervals, with the interaction logic enabling interaction of time-divided signals by applying a delay to signals received at different times at the interaction hardware. The time complexity of the solver increases linearly with the number of variables being modelled, and so this architecture is slower for larger systems.

By contrast, the space-division multiplexing architecture shown in Figure 5B comprises a separate signal generator 510b for each variable, with all signals interacting in signal interaction hardware 512b. The separate physical generation allows all signals to be generated simultaneously, such that the system can be scaled up to a large number of variables by simply adding more hardware, maintaining a quasi-constant time per iteration. While the signal interaction logic hardware 512b in Figure 5B for the full solver system is shown as a single block for simplicity, the interaction logic may alternatively be implemented to include a separate hardware VVM for each channel, as described above and shown in Figure 2.

### Direct detection

As described with reference to Figure 4, in embodiments the signal is converted between optical and analogue domains during operation of the solver. For example, the electric feedback signal representing Equation 1 may be converted to the optical domain using a Mach-Zehnder modulator, which applies the *cos*() function, before evaluating the full equation by detecting it at a photodetector. Direct detection of light intensity measures the square of the signal, which is positive only. However when dealing with signals that take positive or negative values, such as the signals modelling Ising variables herein, conversion between the analogue electronic and optical domain should preserve the sign information in the signal, or any conversion that causes the signal to be limited, for example, to positive values should be corrected by a subsequent operation in the relevant domain. 'Real-valued' may be used herein to refer to optical signals which have values along the real axis of the complex plane, i.e. signals which can take positive or negative real values.

One possible non-claimed detection scheme that allows detection of positive and negative values is coherent detection, which measures the amplitude and phase information of the received optical signal, which can be either positive or negative. However, a disadvantage of coherent detection is that it is more complex to implement than direct detection of light intensity. Coherent detection schemes often require digital signal processing. Some of the advantages of processing signals in the optical and analogue electronic domains, such as the speed of transmission of the signal are lost or diminished if converting back to the digital domain to carry out coherent detection.

An alternative detection method uses direct detection, i.e. detection of light intensity, which does not require the system complexity of coherent detection. Direct detection measures a positive-only signal in the analogue electronic domain, which may then be offset in the analogue electronic domain by adding or subtracting adaptive terms to correct the range of the signal to allow positive or negative values. This may be referred to as 'differential detection'. Similar detection schemes are used in telecommunications to detect binary phase shift keying signals, which are real-valued.

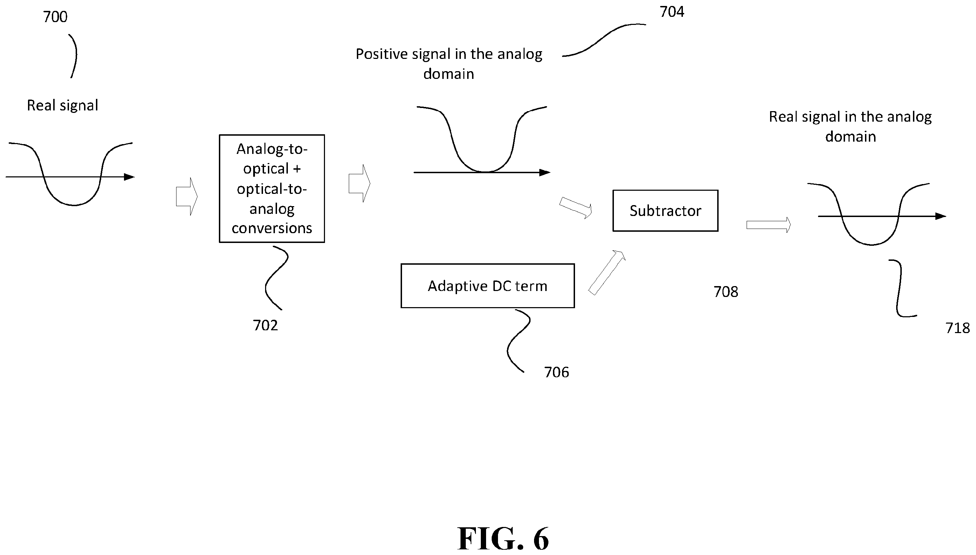

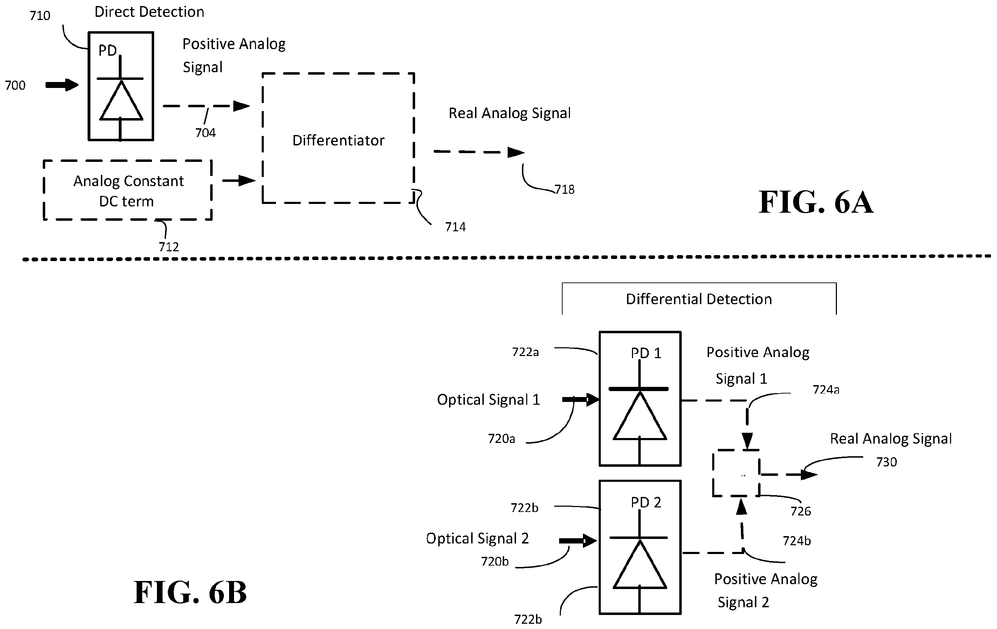

A schematic illustration of this direct detection scheme is shown in Figure 6 for the detection of real-valued optical signals, such as outputs of optical vector multipliers. This is now described for the example application of the solver of Figure 2, described above. A real signal 700, which can take positive or negative values, for example the modelling signal *xᵢ* generated at channel i by the spin generator 300 to represent Equation 1 (which can take values in the range [-1/2,+1/2]), is converted to the optical domain first by at least one analog-to-optical conversion, for example by a modulator 304. An optical vector-by-vector multiplication is carried out for the modelling signal of the channel and the modelling signals received from the other channels, multiplying the input vector by the relevant weights corresponding to the interactions for channel i , outputting an optical signal for the channel representing a weighted sum of input signals.

This signal is converted into an analogue signal by detecting it at photodetector 308. However, the detected signal is restricted to be positive only, as the photodetector 404 measures light intensity, which cannot have negative values. To correct this, the output signals of the VVM operation are corrected to allow positive or negative values by adding a DC offset term, shown in Figure 2 as 312. This DC offset term is specific to each spin and evaluated and set at the initialization of the system.

This enables measurement of positive and negative signals required by the solver by adjusting the signal in the analogue domain. This differential detection scheme is simpler than a coherent one and can be implemented easily to convert the signal directly from the optical to the analogue electronic domain. However, for the VVM output, if the given input signals have different wavelengths, attention should be paid that the path lengths of all signals are matched. Incoherent addition of signals will be described in more detail below in the context of the operation of a wavelength selective switch.

While this differential detection scheme is described above in relation to the present solver architecture, direct detection with adaptive offset terms can be used for any application in which optical vector-by-vector multiplication operations taking real positive and negative values can be implemented. For example, this may be used in machine learning applications, such as deep neural networks, in which input vectors may be multiplied by network weights. This differential detection scheme may be applied to applications using various types of optical VVMs such as spatial light modulators (SLM), ring resonators, or wavelength selective switches, described in more detail below. This differential detection method has the advantage of allowing operations to be carried out in the optical domain, providing a significant speed improvement over digital operations, while enabling the desired range of real valued signals to be modelled, without requiring the difficult implementation of coherent detection schemes. Such a differential detection scheme may be implemented without requiring phase sensitivity of the system if different wavelengths are used for the input signals of the OVM, such as in a wavelength-selective switch or ring resonator VVM.

Figure 6A is a schematic block diagram of a differential detection scheme, where a constant analogue electronic DC term 712 is added to the signal detected by a photodetector. An optical signal is received at a photodetector 710, which, as described above, converts the real optical signal 700 into an analogue signal 704 that can take positive values only. A separate analogue constant DC term 712 is subtracted from the positive analogue signal in a differentiator 714, which is a possible implementation of the subtractor 708 shown in Figure 6. The analogue DC term 712 may be generated using one or more analogue electronic components, or by using an optical signal, as described below with reference to Figure 6B. Analogue differentiators are well-known in the art of electronic engineering and will not be described further herein. The output of the differentiator is a real analogue signal 718 obtained by subtracting the constant DC term from the positive-only signal 704, which brings the analogue signal into the desired range, where it may take positive or negative values. As previously mentioned, each DC term is specific to a photodetector and it may be evaluated and set when the system is initialized. Note that the DC term may be viewed equivalently as a negatively valued analogue signal which is added to the positive analog signal 704, or as a positive signal subtracted from the positive analog signal 704.

Figure 6B is a schematic block diagram of an optical-offset differential detection scheme, in which any two optical signals 720a, 720b may be detected at a pair of photodetectors 722a, 722b, and a difference may be taken between the electrical signals 724a, 724b generated at the respective detectors 722a, 722b using an analogue differentiator 726. This is a known detection configuration, which may be used to implement the above-described method of differential detection, where a real-valued signal, for example the output of an optical VVM, is encoded in the first optical signal 720a, and a constant value is encoded in a second, offset optical signal 720b, which may be provided by a separate light source modulated by a constant value. Each of the signals may be converted to analogue electronic signals 724a, 724b, which take only positive values. These are combined in a differentiator 726 which subtracts the constant offset analogue signal 2 from the analogue signal 1 obtained by detecting the real-valued signal to be evaluated. The effect of this differential detection scheme is the same as the differential detection of Figure 6A, where in this case the DC offset term is obtained by the detection of the constant optical signal 720b. However, for this implementation of differential detection, a second optical offset signal needs to be generated, instead of generating an analogue DC offset signal directly using analogue electronic components.

Note that in the described embodiments, the solver models x and the corresponding feedback signal in the form of positive and negative "spin" signals representing Ising variables, e.g. -1/1, as a method to solve QUBO problems which are easily mapped to Ising problems. The sign of the feedback signal represents the direction in which to drive the modelling signal x to reduce the energy of the Hamiltonian. However, in other non-claimed embodiments, it is not excluded that purely positive signals could be used. Instead the matrix J may include positive and negative weights. In such embodiments the DC offset 310, 320 is not necessarily required. For example, QUBO variables 1/0 may be modelled directly. In this case, the positive signals generated by direct detection may not need to be corrected.

### Wavelength Selective Switch for Optical VVM

As described above, each channel may implement a respective vector-by-vector multiplier as part of the interaction logic 104. Various possible vector-by-vector multiplier configurations may be used with the solver architecture disclosed herein. Some VVMs may be implemented entirely in the optical domain, such as spatial light modulators, ring resonators, and Mach-Zehnder Interferometers. Other VVMs may be implemented in the analogue electronic domain, for example using memristors to compute the weighted sum of electrical signals.

One example of an optical VVM (OVVM) which is disclosed herein for use in some embodiments of the solver architecture disclosed herein is a wavelength selective switch. (WSS). WSSs are used in telecommunication applications and they allow signals at different wavelengths to be independently optimized to guarantee that all the signals are transmitted at the same power, as well as allowing signals of different wavelengths to be combined together in a single optical fiber or vice versa for add or drop functions at transmission nodes.

The implementation of WSS for optical vector multiplication is based on the fact that WSSs have the capability of emulating the product function as they attenuate (weigh) each individual wavelength and the addition function, achieved by its capability of combining different wavelength into a single fiber, subsequently detected by at least one photodetector.

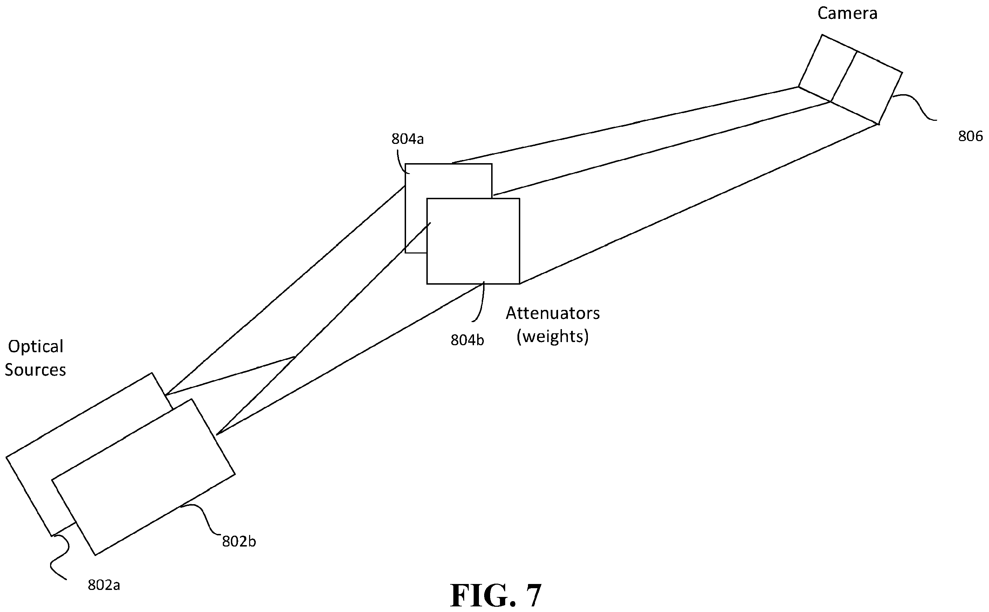

Figure 7 is a schematic block diagram showing the principle of multiplying optical signals by constant factors (weights). In the example of Figure 7, two separate optical signals are provided from optical sources 802a, 802b. The power or intensity of these signals may be measured at a photodetector 806, which generates an electrical signal which depends on the intensity of the incident light. A multiplication of the values encoded by an optical signal can therefore be implemented by applying attenuators, or loss inducing components, 804a, 804b each of which reduce the intensity of the respective optical signals by a configurable constant factor, meaning the resulting analogue signal when detected at the photodetector or camera 806 is scaled by a loss factor of the attenuator applied, which may be interpreted as a 'weight' applied to the input signal. If the two separate optical signals share the same wavelength, their addition at the photodetector will be coherent (i. e. the two optical signals will be added in electric field), while if the two separate optical signals have different wavelengths and their difference is much bigger that the photodetector bandwidth their addition at the photodetector will be incoherent (i. e. the two optical signals will add in power.

A vector-by-matrix multiplication can be broken down into a series of vector-by-vector products of the following form: ${o}_{i} = {\sum }_{j} {W}_{ij} {y}_{j}$

Each element of the output vector o is a sum of elements of the *i^{th}* row of the weight matrix W applied to the input vector y.

The configuration of Figure 7 can be used to implement the weighted sum of the optical vector-by-vector multiplication, by applying attenuators 804a, 804b to a set of input signals representing an input vector, where the attenuators are set so as to correspond to the appropriate elements of a weight matrix. The sum of the weighted inputs is performed by combining the signals in a camera or other detection system 806 which can perform coherent or incoherent addition of optical signals. Coherent addition, which is required if the optical signals share the same wavelength, requires all signals to be phase-matched exactly in order to compute the correct output signal. This is difficult at optical wavelengths. For incoherent addition, the photodetector requires the input signals to have the same path length, within a tolerance given by the bandwidth of the given detector. Incoherent addition with direct detection at a photodetector computes a total power or intensity of the input light signals. This is described later for incoherent detection in a wavelength selective switch, wherein the respective signals being added are of different wavelengths.

The operation of a wavelength selective switch to perform vector-by-vector or vector-by-matrix multiplication based on the above principle will now be described with reference to Figure 8.

The input vector **v** is represented by a set of optical signals 800 of different wavelengths, which may be, for example, a set of modelling signals {*x₁,* ... , *x_{N}*} received from the N channels of a solver such as the one shown in Figure 2 and described above. The input fibers 808 carrying the separate optical signals 800 for the input vector are shown at the bottom right of Figure 8.

Note: for simplicity of illustration the fibers 808, 818 for only one channel 102 of the solver are shown in Figure 8. However, in embodiments where a WSS is applied in such a solver, then there may be a separate set of fibers 808, 818 for each channel 102. Each set of input fibers corresponds to the inputs from the splitters 106 in a given channel 100. The output fiber 818 provides the output of the respective vector-by-vector multiplier (thus overall performing a vector-by-matrix multiplication). In this case, different corresponding subsets of the elements of the SLM 810 implement the interaction logic 104 of the different channels. In embodiments, these elements may be implemented as different pixels at different positions on the same physical plate of the SLM 810 (e.g. same piece of glass or plastic).

The corresponding elements of the weight matrix Q are implemented in a spatial light modulator (SLM) 810, one example of which is a liquid crystal on silicon spatial light modulator (LCoS-SLM), which modulates each input optical signal 800 by a specific factor as described above. In this case, the signals are modulated by a factor dependent on the wavelength of the input, where each column of the SLM 810 corresponds to a different incident wavelength. The input signals 808 are passed through a lens to ensure that each of the signals reach the SLM in the correct horizontal position for its respective wavelength.

The output signal for a given channel is obtained by detecting at a photodetector 820 the modulated optical signals, combined into a single beam 818, which is then detected at a photodetector 820. The combination of the various optical signals, each having a different wavelength, into a single beam at the photodetector 820 may be referred to as wavelength-division multiplexing (WDM). This is facilitated by an arrangement of one or more lenses 816 and/or dispersive element(s) 814 (e.g. diffraction elements such as prisms or diffraction gratings); while the SLM guarantees independent weights to each individual wavelength.

The photodetector 820 performs incoherent addition of the various constituent light signals of different wavelengths. In order for the incoherent detection to compute the sum of the intensities of the constituent signals, it should be ensured that the difference in frequency of the respective signals being combined is much larger than the frequency bandwidth of the photodetector, meaning that the photodetector does not detect cross-terms from the interaction of the signals with each other. Incoherent detection of signals of different wavelengths does not require the signals to be phase matched. By contrast, if using a VVM architecture that takes as input light sources of the same wavelength, coherent addition must be performed at the detector, which has the difficult requirement of requiring all signals to be phase matched.

An architecture similar to that shown in Figure 8 is known for building wavelength selective switch devices for telecommunication applications, where it is typically run in the opposite direction, with the input being a single optical fiber, and the output being a set of optical signals of different wavelengths in different optical fibers. In that scenario, wavelength selective switches are used to add or drop specific wavelengths at specific transmission nodes as well as guarantee that the signals are flat across the transmitted spectrum.

### Extended WSS Architecture for Optical Vector-by-Matrix Multiplication

As described above, the solver described herein for Ising problems may be implemented in one of two architectures. In the first, as shown in Figure 2, the signal interaction logic 104 is implemented as a separate vector-by-matrix multiplier 314 such as a wavelength switch, operated as described above to multiply an input vector by a vector of weights given by a single row of the weight matrix J. Signals generated by each channel are directed by a 1-to-N splitter to the vector-by-vector multiplier at all other channels.

However, in the second architecture, a global vector-by-matrix multiplier (VMM) may be implemented, wherein the channels of the solver each provide their modelling signal *xᵢ* to the VMM to form an input vector, the matrix in full being implemented in this VMM. The solver architecture shown in Figure 1 corresponds to this architecture where the interaction logic 104 of each channel is implemented at least in part by a respective subset of the elements (e.g. a row in the example shown) of the global vector-by-matrix multiplier, rather than by a separate individual multiplier for each channel. In embodiments, these elements may be integrated into the same SLM plate (e.g. same piece of glass or plastic) at different pixel positions.

An example WSS architecture is now described which extends the architecture of the WSS vector-by-vector multiplier to carry out vector-by-matrix operations. This architecture has the advantage of being capable of processing many more spins simultaneously than the vector-by-vector WSS described above.

Figure 9 shows an example wavelength-selective switch configuration for computing vector-by-matrix multiplication, which may be used to implement the second solver architecture. This wavelength selective switch comprises an input array 908 of light sources generating a set of signals of different wavelengths, a lenslet array 900, a modified SLM 902, a dispersion element 814 (e.g. diffraction element) and an output array of light signals which are detected at an array of photodetectors, not shown in Figure 9.

To use a spatial light modulator for vector-by-matrix multiplication in this example solver architecture, the vertical axis of the SLM needs to provide different weights even for the same wavelength, so that the whole functionality of the vector-by-matrix multiplication is achieved. This is because, for matrix multiplication, the input vector needs to be multiplied by each row of the matrix Q to generate the full output vector. The SLM 908 is a modified version of that shown in Figure 8, wherein an array of modulators is arranged in an array, with the losses applied by each modulator reflecting the weights of the matrix to be applied to the input, i.e. a row of the modified SLM encodes the weights in a row of the matrix *J*. As described above, each channel computes an output comprising the vector multiplication of the input signals with a single row of the matrix *J*. Thus, each of the input signals needs to be processed to be spread out vertically such that they hit each row of the SLM 902, corresponding to a series of vector-by-vector multiplications.

In the example solver architecture with a global VMM, a single input array 908 comprises the modelling signals *xᵢ* generated at each channel. This vector is passed through a lenslet array 900 having a particular geometry that causes the signals to spread out vertically, while collimating the beam in the horizontal direction of the SLM 902 corresponding to that signal's wavelength. This allows more input signals of different wavelengths to be processed at a single SLM. Moving from a single lens as in Figure 8, to a lenslet array as in Figure 9, enables scaling to more wavelengths. A lenslet array improves the collimation properties of the beam in both directions.

Note that in the architecture of Figure 9, the 1-to-N splitter 106 of Figure 2 is implemented by the vertical spreading of the input signals over the rows of the SLM, each corresponding to the spin interaction terms for a different channel.

The SLM 902 comprises a 2D array of modulators, each element of the array applying a respective weight to the received input signal, in contrast with the SLM described for the vector-by-vector multiplier in Figure 8, which does not require elements in the same 'column' but different vertical positions to have different values. Each weighted signal at a particular wavelength, but modulated with a different weight, i.e. each signal of a column of the SLM 902, needs to bounce off the dispersive element 814 at a different vertical position to guarantee that the combination of the WDM signals occurs at the right photodetector in the photodetector array 904. The dispersive element may be implemented as a diffraction element such as a diffraction grating or prism.

In embodiments, the output signals may be directed from the element 814 via one or more lenses, to direct the signals into a beam at the correct vertical height to be detected using incoherent addition at the photodetector corresponding to the output vector element represented by that beam. E.g. another lenslet array may also be included between the dispersive element 814 and the multiple channels (potentially fibers) at the end of the system.

The photodetector array 904 is arranged as a set of photodetectors in a vertical array, each combined signal directed from the dispersive element 814 corresponding with the output signal for a different channel.

A solver which uses a vector-by-matrix multiplier architecture described above allows simultaneous processing of the interaction of spins for all channels using a single hardware arrangement such as the one shown in Figure 9, while the use of a lenslet array to collimate the input. This may be further scaled to enable even larger numbers of inputs by splitting each beam into multiple beams which are directed to a configuration of multiple SLMs 902.

While optical vector multiplication has also been implemented by a number of existing technologies, such as spatial light modulators which do not use wavelength division multiplexing, ring resonators, and Mach Zehnder interferometers. Such technologies are described in detail for example in K. Kitayama et al, "Novel frontier of photonics for data processing-Photonic accelerator", APL Photonics 2019, https://doi.org/10.1063/1.5108912., which is incorporated herein by reference in its entirety. The wavelength-selective switch implementation combines the spatial modulation of SLMs with the wavelength division of ring resonators, but where a ring resonator implementation requires the input signal to be passed through a series of ring resonators, the SLM only requires each signal to be passed through a single modulator, which is an advantage in terms of system losses. SLM VMM implementations do not use wavelength division, and instead use a single optical source, and use coherent addition at the photodetectors to compute the weighted sum for each element of the output array. The wavelength selective switch combines the advantages of both these techniques.

While the above description of wavelength-selective switches refers to its implementation in a solver architecture such as that described herein. However, vector-by-matrix multiplication has many applications, particularly in machine learning, for example to apply weights of a neural network to input vectors. The wavelength selective switch described herein may be used in such applications. Similarly, the wavelength selective switch VMM may be applied to other solver architectures, such as the time-division multiplexing architecture shown in Figure 5A.

The techniques disclosed herein can be applied to a wide range of applications, in particular the solver implementation disclosed herein can be used to solve any NP-hard problems for which a known transformation to the Ising formulation exists. A well-known example of such problems is the Travelling Salesman problem. This may be also be used for problems in other fields, for example, in determining molecular similarity, for which work has been done to find a transformation of a graph similarity problem of graphical representations of molecules into a QUBO formulation. This work is described in Hernandez, Maritza, et al. "A quantum-inspired method for three-dimensional ligand-based virtual screening." Journal of Chemical Information and Modeling 59.10 (2019): 4475-4485.

More generally, according to a first aspect disclosed herein there is provided a system for performing vector multiplication using optics. The system comprises one or more channels, each comprising: a respective light signal generator comprising a light source configured to generate a respective optical signal, and a modulator arranged to modulate the amplitude of the respective optical signal to model a value of a respective variable from a vector of variables. Each channel also comprises: a respective optical vector multiplier arranged to receive a vector of optical signals including the respective optical signal, and multiply the vector of optical signals by a respective vector of weights in the optical domain, the weights modelling interactions between the variables of the vector of variables; and a respective light detector arranged to detect an intensity of a resulting output of the respective optical vector multiplier by incoherent detection, thereby generating an analogue intensity signal modulated on a scale that can only take positive values. Each channel further comprises: a respective analog DC offset generator configured to generate a respective DC offset signal encoding a constant DC term for the respective light detector; and a respective differentiator configured to subtract the respective DC offset signal from the analogue intensity signal, resulting in a respective output signal in the form of analogue electronic signal modulated on a scale having positive and negative values.

In embodiments, the variables are binary.

In embodiments, the optical vector multiplier in each channel comprises one of: a spatial light modulator, a wavelength selective switch, a ring resonator, or a Mach-Zehnder interferometer.

In embodiments, the optical vector multiplier in at least one channel comprises a wavelength selective switch.

In embodiments, the respective analog DC offset generator comprises: a respective offset light generator configured to generate a respective offset optical signal; and a respective offset photodetector arranged to detect the intensity of the offset optical signal by the offset photodetector, thereby generating the DC offset signal.

In embodiments, in each channel: the respective light signal generator comprises a respective spin generator arranged to generate a respective spin signal in the form of an analogue electronic signal representing the respective variable, wherein the modulator is arranged to modulate the amplitude of the optical signal based on the respective analogue signal; and the respective spin signal varies on a scale between positive and negative levels to represent the respective variable, but the amplitude of the optical signal can only be positive, the modulator being configured to convert the positive and negative levels of the spin signal into positive amplitudes of the optical signal.

In embodiments, the respective spin generator in each channel comprises a further light source, a further modulator arranged to modulate light from the further light source in dependence on the respective feedback signal, and a further light detector arranged to detect the modulated light from the further modulator and generate the spin signal in dependence thereon.

In embodiments, each channel comprises a respective feedback path arranged to return a respective feedback signal based on the respective output signal to the respective light signal generator, wherein the respective light signal generator is configured to adapt the respective optical signal in dependence on the feedback signal.

In embodiments, in each channel the respective feedback path is arranged to add a respective noise component to the respective output signal in order to produce the respective feedback signal before return to the respective light signal generator.

In embodiments, the system is arranged to estimate values of the vector of variables that optimize a function, the function comprising a weighted sum of a plurality of terms, each term comprising a product of a corresponding subset of the variables from said vector and each term being weighted by a corresponding weight from a matrix of weights that models interactions between the variables; wherein the respective vector of weights in each channel comprises a respective vector of weights from the matrix of weights, representing an interaction between the respective variable and the vector of variables.

In embodiments, the respective light signal generator in each channel is configured to perform the adaptation iteratively according to: ${x}_{i} \left[k+1\right] = {cos}^{2} \left(α∗{x}_{i}\left[k\right]+β∗{\sum }_{j} {J}_{ij} ∗ {x}_{j} \left[k\right] - \frac{π}{4} + {ζ}_{i} \left[k\right]\right) - \frac{1}{2} ,$ (1)
where *xᵢ* is the spin signal of channel *i, k* is in index of the iteration, *α* and *β* are coefficients, *J* is the matrix of weights, and ζ is the noise component if dependent on claim 9.

In embodiments, the system comprises a plurality of said channels, wherein: the amplitude of the respective optical signal generated by the respective light signal generator in each channel is modulated to model the value of different respective one of the variable from said vector of variables; and each channel further comprises a respective splitter arranged to supply an instance of the respective optical signal to each of the plurality of channels, the optical vector multiplier in each channel thus receiving the vector of optical signals in order to perform the respective vector multiplication.

In embodiments, the system comprises a single channel in which the light signal generator is configured to multiplex the plurality of optical signals into a same beam of light by time-division multiplexing; wherein the optical vector multiplier comprises an arrangement of delay lines to delay the optical signals of said vector by different path lengths so as to overlap in time, and at least one further optical element arranged to perform the vector multiplication based on the delayed optical signals.

In embodiments, each channel is used to represent a node or layer of a neural network.

According to another aspect disclosed herein, there is provided a corresponding method of performing vector multiplication using optics.

In embodiments the method may further comprise steps in accordance with any of the system features disclosed herein.

## Claims

1. A system for performing vector multiplication using optics, the system comprising one or more channels (102), each comprising:
a respective light signal generator (100) comprising a light source (302) configured to generate a respective optical signal and a modulator (304) arranged to modulate the amplitude of the respective optical signal to model a value of a respective variable from a vector of variables;
a respective optical vector multiplier (314) arranged to receive a vector of optical signals including the respective optical signal, and multiply the vector of optical signals by a respective vector of weights in the optical domain, the weights modelling interactions between the variables of the vector of variables; and
a respective light detector (308) arranged to detect an intensity of a resulting output of the respective optical vector multiplier by incoherent detection, thereby generating an analogue intensity signal modulated on a scale that can only take positive values;
**characterized in that** each channel further comprises:
a respective analog DC offset generator (310) configured to generate a respective DC offset signal encoding a constant DC term for the respective light detector; and
a respective differentiator (312) configured to subtract the respective DC offset signal from the analogue intensity signal, resulting in a respective output signal in the form of analogue electronic signal modulated on a scale having positive and negative values.

2. The system of any preceding claim, wherein the variables are binary.

3. The system of any preceding claim, wherein the optical vector multiplier (314) in each channel comprises one of:
- a spatial light modulator,
- a wavelength selective switch,
- a ring resonator, or
- a Mach-Zehnder interferometer.

4. The system of any preceding claim, wherein the optical vector multiplier (314) in at least one channel comprises a wavelength selective switch.

5. The system of any preceding claim, wherein the respective analog DC offset generator (310) comprises:
a respective offset light generator configured to generate a respective offset optical signal, and
a respective offset photodetector arranged to detect the intensity of the offset optical signal by the offset photodetector, thereby generating the DC offset signal.

6. The system of any preceding claim, wherein in each channel (102):
the respective light signal generator (100) comprises a respective spin generator (300) arranged to generate a respective spin signal in the form of an analogue electronic signal representing the respective variable, wherein the modulator (304) is arranged to modulate the amplitude of the optical signal based on the respective analogue signal; and
the respective spin signal varies on a scale between positive and negative levels to represent the respective variable, but the amplitude of the optical signal can only be positive, the modulator being configured to convert the positive and negative levels of the spin signal into positive amplitudes of the optical signal.

7. The system of claim 6, wherein the respective spin generator (300) in each channel comprises a further light source, a further modulator arranged to modulate light from the further light source in dependence on the respective feedback signal, and a further light detector arranged to detect the modulated light from the further modulator and generate the spin signal in dependence thereon.

8. The system of any preceding claim, wherein each channel (102) comprises a respective feedback path (108) arranged to return a respective feedback signal based on the respective output signal to the respective light signal generator, wherein the respective light signal generator (100) is configured to adapt the respective optical signal in dependence on the feedback signal.

9. The system of claim 8, wherein in each channel (102) the respective feedback path (108) is arranged to add a respective noise component to the respective output signal in order to produce the respective feedback signal before return to the respective light signal generator.

10. The system of claim 9, arranged to estimate values of the vector of variables that optimize a function, the function comprising a weighted sum of a plurality of terms, each term comprising a product of a corresponding subset of the variables from said vector and each term being weighted by a corresponding weight from a matrix of weights that models interactions between the variables;
wherein the respective vector of weights in each channel comprises a respective vector of weights from the matrix of weights, representing an interaction between the respective variable and the vector of variables.

11. The system of claim 10, wherein the respective light signal generator in each channel is configured to perform the adaptation iteratively according to: ${x}_{i} \left[k+1\right] = {cos}^{2} \left(α∗{x}_{i}\left[k\right]+β∗{\sum }_{j} {J}_{ij} ∗ {x}_{j} \left[k\right] - \frac{π}{4} + {ζ}_{i} \left[k\right]\right) - \frac{1}{2} ,$ (1) where *xᵢ* is the spin signal of channel *i, k* is in index of the iteration, *α* and *β* are coefficients, *J* is the matrix of weights, and ζ is the noise component.

12. The system of claim 10 or 11, comprising a plurality of said channels (102), wherein:
the amplitude of the respective optical signal generated by the respective light signal generator (100) in each channel is modulated to model the value of different respective one of the variable from said vector of variables; and
each channel further comprises a respective splitter (106) arranged to supply an instance of the respective optical signal to each of the plurality of channels, the optical vector multiplier (314) in each channel thus receiving the vector of optical signals in order to perform the respective vector multiplication.

13. The system of claim 10 or 11, comprising a single channel (102) in which the light signal generator (100) is configured to multiplex the plurality of optical signals into a same beam of light by time-division multiplexing;
wherein the optical vector multiplier (314) comprises an arrangement of delay lines to delay the optical signals of said vector by different path lengths so as to overlap in time, and at least one further optical element arranged to perform the vector multiplication based on the delayed optical signals.

14. The system of any of claims 1 to 9, wherein each channel (102) is used to represent a node or layer of a neural network.

15. A method of performing vector multiplication using optics, the method comprising, for each of one or more channels (102):
generating, by a light source (302), a respective optical signal;
modulating, using a modulator (304), the amplitude of the respective optical signal to model a value of a respective variable from a vector of variables;
receiving, at a respective optical vector multiplier (314), a vector of optical signals, including the respective optical signal,
multiplying the vector of optical signals by a respective vector of weights in the optical domain, the weights modelling interactions between the variables of the vector of variables; and
detecting, at a respective light detector (308), an intensity of a resulting output of the respective optical vector multiplier by incoherent detection, thereby generating an analogue intensity signal modulated on a scale that can only take positive values;
**characterized in that** the method further comprises:
generating, by an analog DC offset generator (310), a respective DC offset signal encoding a constant DC term for the respective light detector; and
subtracting, at a respective differentiator (312), the respective DC offset signal from the analogue intensity signal, resulting in a respective output signal in the form of analogue electronic signal modulated on a scale having positive and negative values.

## Patentansprüche

1. System zur Durchführung einer Vektormultiplikation unter Verwendung optischer Verfahren, das System umfassend einen oder mehrere Kanäle (102), von denen jeder umfassend:
einen jeweiligen Lichtsignalgenerator (100), umfassend eine Lichtquelle (302), die konfiguriert ist, um ein jeweiliges optisches Signal zu erzeugen, sowie einen Modulator (304), der so angeordnet ist, dass er die Amplitude des jeweiligen optischen Signals moduliert, um einen Wert einer jeweiligen Variablen aus einem Vektor von Variablen abzubilden;
einen jeweiligen optischen Vektormultiplikator (314), der so angeordnet ist, dass er einen Vektor aus optischen Signalen, der das jeweilige optische Signal enthält, empfängt und den Vektor aus optischen Signalen mit einem jeweiligen Vektor aus Gewichten im optischen Bereich multipliziert, wobei die Gewichte Wechselwirkungen zwischen den Variablen des Vektors von Variablen abbilden; und
einen jeweiligen Lichtdetektor (308), der dazu angeordnet ist, die Intensität eines resultierenden Ausgangssignals des jeweiligen optischen Vektormultiplikators durch inkohärente Detektion zu erfassen und dadurch ein analoges Intensitätssignal zu erzeugen, das auf einer Skala moduliert ist, die ausschließlich positive Werte annehmen kann;
**dadurch gekennzeichnet, dass** jeder Kanal ferner Folgendes umfasst:
einen jeweiligen analogen Gleichstrom-Offset-Generator (310), der konfiguriert ist, um ein jeweiliges Gleichstrom-Offset-Signal zu erzeugen, das einen konstanten Gleichstromanteil für den jeweiligen Lichtdetektor codiert; und
einen jeweiligen Differenzierer (312), der konfiguriert ist, um das jeweilige Gleichstrom-Offset-Signal vom analogen Intensitätssignal zu subtrahieren, was zu einem jeweiligen Ausgangssignal in Form eines analogen elektronischen Signals führt, das auf einer Skala mit positiven und negativen Werten moduliert ist.

2. System nach einem der vorstehenden Ansprüche, wobei die Variablen binär sind.

3. System nach einem der vorstehenden Ansprüche, wobei der optische Vektormultiplikator (314) in jedem Kanal eines der Folgenden umfasst:
- einen räumlichen Lichtmodulator,
- einen wellenlängenselektiven Schalter,
- einen Ringresonator, oder
- ein Mach-Zehnder-Interferometer.

4. System nach einem der vorstehenden Ansprüche, wobei der optische Vektormultiplikator (314) in mindestens einem Kanal einen wellenlängenselektiven Schalter umfasst.

5. System nach einem der vorstehenden Ansprüche, wobei der jeweilige analoge Gleichstrom-Offset-Generator (310) Folgendes umfasst:
einen jeweiligen Offset-Lichtgenerator, der konfiguriert ist, um ein jeweiliges optisches Offset-Signal zu erzeugen, und
einen jeweiligen Offset-Fotodetektor, der so angeordnet ist, dass er die Intensität des optischen Offset-Signals durch den Offset-Fotodetektor erfasst und dadurch das Gleichstrom-Offset-Signal erzeugt.

6. System nach einem der vorangegangenen Ansprüche, wobei in jedem Kanal (102):
der jeweilige Lichtsignalgenerator (100) einen jeweiligen Spingenerator (300) umfasst, der so angeordnet ist, dass er ein jeweiliges Spinsignal in Form eines analogen elektronischen Signals erzeugt, das die jeweilige Variable darstellt, wobei der Modulator (304) so angeordnet ist, dass er die Amplitude des optischen Signals auf der Grundlage des jeweiligen analogen Signals moduliert; und
das jeweilige Spinsignal auf einer Skala zwischen positiven und negativen Pegeln variiert, um die jeweilige Variable darzustellen, die Amplitude des optischen Signals jedoch nur positiv sein kann, wobei der Modulator konfiguriert ist, um die positiven und negativen Pegel des Spinsignals in positive Amplituden des optischen Signals umzuwandeln.

7. System nach Anspruch 6, wobei der jeweilige Spingenerator (300) in jedem Kanal eine weitere Lichtquelle, einen weiteren Modulator, der so angeordnet ist, dass er das Licht der weiteren Lichtquelle in Abhängigkeit vom jeweiligen Rückkopplungssignal moduliert, sowie einen weiteren Lichtdetektor, der so angeordnet ist, dass er das modulierte Licht des weiteren Modulators erfasst und in Abhängigkeit davon das Spinsignal erzeugt, umfasst.

8. System nach einem der vorangehenden Ansprüche, wobei jeder Kanal (102) einen jeweiligen Rückkopplungspfad (108) umfasst, der so angeordnet ist, dass er ein jeweiliges Rückkopplungssignal, das auf dem jeweiligen Ausgangssignal basiert, an den jeweiligen Lichtsignalgenerator zurückführt, wobei der jeweilige Lichtsignalgenerator (100) konfiguriert ist, um das jeweilige optische Signal in Abhängigkeit vom Rückkopplungssignal anzupassen.

9. System nach Anspruch 8, wobei in jedem Kanal (102) der jeweilige Rückkopplungspfad (108) so angeordnet ist, dass er dem jeweiligen Ausgangssignal eine jeweilige Rauschkomponente hinzufügt, um das jeweilige Rückkopplungssignal zu erzeugen, bevor dieses zum jeweiligen Lichtsignalgenerator zurückgeführt wird.

10. System nach Anspruch 9, das so angeordnet ist, dass es Werte des Vektors von Variablen schätzt, die eine Funktion optimieren, die Funktion umfassend eine gewichtete Summe einer Vielzahl von Begriffen, jeder Begriff umfassend ein Produkt einer jeweiligen Teilmenge der Variablen aus dem genannten Vektor, wobei jeder Begriff mit einem jeweiligen Gewicht aus einer Gewichtsmatrix gewichtet wird, die Wechselwirkungen zwischen den Variablen modelliert;
wobei der jeweilige Vektor von Gewichten in jedem Kanal einen jeweiligen Vektor von Gewichten aus der Gewichtsmatrix umfasst, der eine Wechselwirkung zwischen der jeweiligen Variablen und dem Vektor von Variablen darstellt.

11. System nach Anspruch 10, wobei der jeweilige Lichtsignalgenerator in jedem Kanal konfiguriert ist, um die Anpassung iterativ gemäß folgender Gleichung durchzuführen: ${x}_{i} \left[k+1\right] = {cos}^{2} \left(α∗{x}_{i}\left[k\right]+β∗{Σ}_{j}{J}_{ij}∗{x}_{j}\left[k\right]-\frac{π}{4}+{ζ}_{i}\left[k\right]\right) - \frac{1}{2} ,$ (1) wobei xᵢ das Spinsignal von Kanal *i* ist, *k* der Iterationsindex ist, α und β Koeffizienten sind, J die Gewichtungsmatrix ist und ζ die Rauschkomponente ist.

12. System nach Anspruch 10 oder 11, umfassend eine Vielzahl der Kanäle (102), wobei:
die Amplitude des jeweiligen optischen Signals, das von dem jeweiligen Lichtsignalgenerator (100) in jedem Kanal erzeugt wird, moduliert wird, um den Wert einer jeweils unterschiedlichen Variablen aus dem Vektor von Variablen abzubilden; und
jeder Kanal ferner einen jeweiligen Splitter (106) umfasst, der so angeordnet ist, dass er eine Instanz des jeweiligen optischen Signals an jeden der mehreren Kanäle liefert, wobei der optische Vektormultiplikator (314) in jedem Kanal somit den Vektor aus optischen Signalen empfängt, um die jeweilige Vektormultiplikation durchzuführen.

13. System nach Anspruch 10 oder 11, umfassend einen einzelnen Kanal (102), in dem der Lichtsignalgenerator (100) konfiguriert ist, um die Vielzahl von optischen Signalen mittels Zeitmultiplexverfahren in einen einzigen Lichtstrahl zu multiplexen;
wobei der optische Vektormultiplikator (314) eine Anordnung von Verzögerungsleitungen umfasst, um die optischen Signale des Vektors um unterschiedliche Weglängen zu verzögern, sodass sie sich zeitlich überlappen, sowie mindestens ein weiteres optisches Element, das so angeordnet ist, dass es die Vektormultiplikation auf der Grundlage der verzögerten optischen Signale durchführt.

14. System nach einem der Ansprüche 1 bis 9, wobei jeder Kanal (102) dazu verwendet wird, einen Knoten oder eine Schicht eines neuronalen Netzes darzustellen.

15. Verfahren zur Durchführung einer Vektormultiplikation unter Verwendung optischer Mittel, das Verfahren umfassend für jeden von einem oder mehreren Kanälen (102):
Erzeugen eines jeweiligen optischen Signals durch eine Lichtquelle (302);
Modulieren der Amplitude des jeweiligen optischen Signals unter Verwendung eines Modulators (304), um einen Wert einer jeweiligen Variablen aus einem Vektor von Variablen abzubilden;
Empfangen eines Vektors aus optischen Signalen, der das jeweilige optische Signal einschließt, an einem jeweiligen optischen Vektormultiplikator (314),
Multiplizieren des Vektors aus optischen Signalen mit einem jeweiligen Vektor von Gewichten im optischen Bereich, wobei die Gewichte Wechselwirkungen zwischen den Variablen des Vektors von Variablen abbilden; und
Erfassen einer Intensität eines resultierenden Ausgangssignals des jeweiligen optischen Vektormultiplikators durch inkohärente Detektion an einem jeweiligen Lichtdetektor (308), wodurch ein analoges Intensitätssignal erzeugt wird, das auf einer Skala moduliert ist, die ausschließlich positive Werte annehmen kann;
**dadurch gekennzeichnet, dass** das Verfahren ferner Folgendes umfasst:
Erzeugen eines jeweiligen Gleichstrom-Offset-Signals durch einen analogen Gleichstrom-Offset-Generator (310), wobei dieses Signal einen konstanten Gleichstromanteil für den jeweiligen Lichtdetektor codiert; und
Subtrahieren des jeweiligen Gleichstrom-Offset-Signals von dem analogen Intensitätssignal in einem jeweiligen Differenzierer (312), was zu einem jeweiligen Ausgangssignal in Form eines analogen elektronischen Signals führt, das auf einer Skala mit positiven und negativen Werten moduliert ist.

## Revendications

1. Système permettant de réaliser une multiplication vectorielle à l'aide de l'optique, le système comprenant un ou plusieurs canaux (102), chacun comprenant :
un générateur de signal lumineux respectif (100) comprenant une source lumineuse (302) configurée pour générer un signal optique respectif et un modulateur (304) agencé pour moduler l'amplitude du signal optique respectif afin de modéliser une valeur d'une variable respective à partir d'un vecteur de variables ;
un multiplicateur vectoriel optique respectif (314) agencé pour recevoir un vecteur de signaux optiques comportant le signal optique respectif, et pour multiplier le vecteur de signaux optiques par un vecteur de poids respectif dans le domaine optique, les poids modélisant les interactions entre les variables du vecteur de variables ; et
un détecteur de lumière respectif (308) agencé pour détecter une intensité d'une sortie résultante du multiplicateur vectoriel optique respectif par détection incohérente, générant ainsi un signal d'intensité analogique modulé sur une échelle qui peut uniquement prendre des valeurs positives ;
**caractérisé en ce que** chaque canal comprend en outre :
un générateur de décalage CC analogique respectif (310) configuré pour générer un signal de décalage CC respectif codant un terme CC constant pour le détecteur de lumière respectif ; et
un différentiateur respectif (312) configuré pour soustraire le signal de décalage CC respectif du signal d'intensité analogique, ce qui produit un signal de sortie respectif sous la forme d'un signal électronique analogique modulé sur une échelle ayant des valeurs positives et négatives.

2. Système selon l'une quelconque des revendications précédentes, dans lequel les variables sont binaires.

3. Système selon l'une quelconque des revendications précédentes, dans lequel le multiplicateur vectoriel optique (314) dans chaque canal comprend l'un parmi :
- un modulateur de lumière spatial,
- un commutateur sélectif en longueur d'onde,
- un résonateur en anneau, ou
- un interféromètre de Mach-Zehnder.

4. Système selon l'une quelconque revendication précédente, dans lequel le multiplicateur vectoriel optique (314) dans au moins un canal comprend un commutateur sélectif en longueur d'onde.

5. Système selon l'une quelconque revendication précédente, dans lequel le générateur de décalage CC analogique respectif (310) comprend :
un générateur de lumière de décalage respectif configuré pour générer un signal optique de décalage respectif, et un photodétecteur de décalage respectif agencé pour détecter l'intensité du signal optique de décalage par le photodétecteur de décalage, générant ainsi le signal de décalage CC.

6. Système selon l'une quelconque revendication précédente, dans lequel dans chaque canal (102) :
le générateur de signal lumineux respectif (100) comprend un générateur de spin respectif (300) agencé pour générer un signal de spin respectif sous la forme d'un signal électronique analogique représentant la variable respective, dans lequel le modulateur (304) est agencé pour moduler l'amplitude du signal optique sur la base du signal analogique respectif ; et
le signal de spin respectif varie sur une échelle entre des niveaux positifs et négatifs pour représenter la variable correspondante, mais l'amplitude du signal optique peut uniquement être positive, le modulateur étant configuré pour convertir les niveaux positifs et négatifs du signal de spin en amplitudes positives du signal optique.

7. Système selon la revendication 6, dans lequel le générateur de spin respectif (300) dans chaque canal comprend une source lumineuse supplémentaire, un modulateur supplémentaire agencé pour moduler la lumière à partir de la source lumineuse supplémentaire en fonction du signal de rétroaction respectif, et un détecteur de lumière supplémentaire agencé pour détecter la lumière modulée à partir du modulateur supplémentaire et générer le signal de spin en fonction de celle-ci.

8. Système selon l'une quelconque revendication précédente, dans lequel chaque canal (102) comprend une voie de rétroaction respective (108) agencée pour renvoyer un signal de rétroaction respectif sur la base du signal de sortie respectif vers le générateur de signal lumineux respectif, dans lequel le générateur de signal lumineux respectif (100) est configuré pour adapter le signal optique respectif en fonction du signal de rétroaction.

9. Système selon la revendication 8, dans lequel dans chaque canal (102) la voie de rétroaction respective (108) est agencée pour ajouter une composante de bruit respective au signal de sortie respectif afin de produire le signal de rétroaction respectif avant de le renvoyer vers le générateur de signal lumineux respectif.

10. Système selon la revendication 9, agencé pour estimer les valeurs du vecteur de variables qui optimisent une fonction, la fonction comprenant une somme pondérée d'une pluralité de termes, chaque terme comprenant un produit d'un sous-ensemble correspondant des variables dudit vecteur et chaque terme étant pondéré par un poids correspondant à partir d'une matrice de poids qui modélise les interactions entre les variables ; dans lequel le vecteur de poids respectif dans chaque canal comprend un vecteur de poids respectif à partir de la matrice de poids, représentant une interaction entre la variable respective et le vecteur de variables.

11. Système selon la revendication 10, dans lequel le générateur de signal lumineux respectif dans chaque canal est configuré pour réaliser l'adaptation de manière itérative selon : ${x}_{i} \left[k+1\right] = {cos}^{2} \left(α∗{x}_{i}\left[k\right]+β∗{Σ}_{j}{J}_{ij}∗{x}_{j}\left[k\right]-\frac{π}{4}+{ζ}_{i}\left[k\right]\right) - \frac{1}{2} ,$ (1) où xᵢ est le signal de spin du canal *i, k* est dans l'index de l'itération, α et β sont des coefficients, J est la matrice des poids, et ζ est la composante de bruit.

12. Système selon la revendication 10 ou 11, comprenant une pluralité desdits canaux (102), dans lequel :
l'amplitude du signal optique respectif généré par le générateur de signal lumineux respectif (100) dans chaque canal est modulée pour modéliser la valeur d'une variable respective différente parmi ledit vecteur de variables ; et
chaque canal comprend en outre un séparateur respectif (106) agencé pour fournir une instance du signal optique respectif à chacun parmi la pluralité de canaux, le multiplicateur vectoriel optique (314) dans chaque canal recevant ainsi le vecteur de signaux optiques afin de réaliser la multiplication vectorielle respective.

13. Système selon la revendication 10 ou 11, comprenant un canal unique (102) dans lequel le générateur de signal lumineux (100) est configuré pour multiplexer la pluralité de signaux optiques en un même faisceau de lumière par multiplexage par répartition dans le temps ; dans lequel le multiplicateur vectoriel optique (314) comprend un agencement de lignes à retard pour retarder les signaux optiques dudit vecteur par des longueurs de voie différentes de manière à ce qu'ils se chevauchent dans le temps, et au moins un élément optique supplémentaire agencé pour réaliser la multiplication vectorielle sur la base des signaux optiques retardés.

14. Système selon l'une quelconque des revendications 1 à 9, dans lequel chaque canal (102) est utilisé pour représenter un nœud ou une couche d'un réseau neuronal.

15. Procédé de réalisation d'une multiplication vectorielle à l'aide de l'optique, le procédé comprenant, pour chacun d'un ou plusieurs canaux (102) :
la génération, par une source lumineuse (302), d'un signal optique respectif ;
la modulation, à l'aide d'un modulateur (304), de l'amplitude du signal optique respectif afin de modéliser une valeur d'une variable respective à partir d'un vecteur de variables ;
la réception, au niveau d'un multiplicateur vectoriel optique respectif (314), d'un vecteur de signaux optiques comportant le signal optique respectif ,
la multiplication du vecteur de signaux optiques par un vecteur de poids respectif dans le domaine optique, les poids modélisant les interactions entre les variables du vecteur de variables ; et
la détection, au niveau d'un détecteur de lumière respectif (308), d'une intensité d'une sortie résultante du multiplicateur vectoriel optique respectif par détection incohérente, générant ainsi un signal d'intensité analogique modulé sur une échelle qui peut uniquement prendre des valeurs positives ;
**caractérisé en ce que** le procédé comprend en outre :
la génération, par un générateur de décalage CC analogique (310), d'un signal de décalage CC respectif codant un terme CC constant pour le détecteur de lumière respectif ; et
la soustraction, au niveau d'un différentiateur respectif (312), du signal de décalage CC respectif du signal d'intensité analogique, ce qui produit un signal de sortie respectif sous la forme d'un signal électronique analogique modulé sur une échelle ayant des valeurs positives et négatives.
